# EUROPEAN PATENT SPECIFICATION

(11) **EP 4 075 737 B1**
(45) Date of publication and mention of the grant of the patent: **17.12.2025**
(21) Application number: 20911285.3
(22) Date of filing: 30.12.2020
(51) Int. Cl.: H04L 12/40

(54) **INFORMATION TRANSMISSION METHOD, COMMUNICATION DEVICE AND SYSTEM, AND COMPUTER-READABLE STORAGE MEDIUM**
INFORMATIONSÜBERTRAGUNGSVERFAHREN, KOMMUNIKATIONSVORRICHTUNG UND -SYSTEM, UND COMPUTERLESBARES SPEICHERMEDIUM
PROCÉDÉ DE TRANSMISSION D'INFORMATIONS, DISPOSITIF ET SYSTÈME DE COMMUNICATION, ET SUPPORT D'ENREGISTREMENT LISIBLE PAR ORDINATEUR

(30) Priority: 31.12.2019 CN 201911426337
(43) Date of publication of application: 19.10.2022
(73) Proprietor: Shenzhen Yinwang Intelligent Technologies Co., Ltd., Shenzhen, Guangdong 518129 (CN)
(72) Inventor: YANG, Yanjiang, Shenzhen, Guangdong 518129 (CN); ZHONG, Steven Yin, Shenzhen, Guangdong 518129 (CN); WEI, Zhuo, Shenzhen, Guangdong 518129 (CN)
(74) Representative: Körber, Martin Hans
(86) International application number: PCT/CN2020/141571
(87) International publication number: WO 2021/136416

(56) References cited:
- EP-A1- 3 264 718
- CN-A- 104 025 506
- CN-A- 108 075 897
- CN-A- 109 995 629
- US-A1- 2003 236 969
- US-A1- 2017 013 005
- US-B1- 10 243 732

## Description

### TECHNICAL FIELD

This application relates to the field of communications technologies, and in particular, to an information transmission method, a communications device and system, and a computer-readable storage medium.

### BACKGROUND

A controller area network (Controller Area Network, CAN) is a widely used in-vehicle network type. By using a CAN network protocol, a plurality of vehicle-mounted devices (Electronic Control Units, ECUs) may communicate with each other, and may further control a vehicle to work. A CAN message authentication mechanism is closely related to in-vehicle network security, vehicle security, and personal safety of in-vehicle persons. A basic requirement of the CAN message authentication mechanism is to prevent replay attacks.

AutoSar SecOC (Specification of Secure Onboard Communication) is a standard for vehicle-mounted systems. AutoSar specifies that CAN message authentication is performed by using a counter. Specifically, when CAN communications is performed between ECU devices, limited by a data payload capability of a CAN message, the CAN message generally carries a low 8-bit counter value when a transmit end sends the CAN message. However, when receiving the CAN message, a receive end performs authentication protection on the CAN message by using a full counter value maintained by the receive end and the low 8-bit counter value carried in the CAN message. In this way, after the authentication succeeds, the two counter values can be synchronized, and the CAN message can be processed.

As a quantity of CAN messages increases, the counter value is carried. For example, after the transmit end sends 2⁸ = 256 CAN messages, the low 8-bit counter value is set to zero, and is carried in a high-order bit. In this case, if the receive end is not synchronized with the transmit end for more than 256 frames, because high-order counter values are different, when the receive end performs authentication protection on a CAN message, it is likely to authenticate an invalid message as a valid message, or authenticate a valid message as an invalid message. Consequently, communications security and vehicle security are severely affected.

US 2017/0013005 A1 discloses a system and a method for consistency based anomaly detection in an in-vehicle communication network, comprising: monitoring, by a processor, traffic on a first and second network portions of an in-vehicle communication network, and determining whether or not a first message detected on a first network portion is anomalous based on at least one of: an attribute of a second message detected on the second network portion and an absence of a second message from the second network portion over a predefined time period.

### SUMMARY

This application provides an information transmission method, a communications device and system, and a computer-readable storage medium, to improve security and stability of in-vehicle network communications. The invention is defined in the independent claims. Additional features of the invention are provided in the dependent claims.

According to a first aspect, this application provides an information transmission method. The method may be applied to a first device. The first device communicates with a second device by using a CAN message. In addition, the first device includes a first counter, the second device includes a second counter, and both the first counter and the second counter perform counting based on data receiving and sending between the first device and the second device.

In a communications system, when the second device sends a CAN message, the CAN message carries a second counter value. In this case, after receiving the CAN message, the first device may determine whether a first counter value matches the second counter value. If the first counter value does not match the second counter value, the first device verifies the CAN message by using the second counter value and a global counter value. The global counter value is a current global counter value obtained by the first device. In this way, for any CAN message, authentication protection can be implemented based on a local counter value maintained by each ECU device. In addition, when counter values do not match, the CAN message may be further verified with reference to the global counter value. This improves communications security of the CAN message, can reduce, to some extent, a possibility of authenticating an invalid message as a valid message, and helps improve communications security of a communications system. When the communications system is an in-vehicle network communications system, vehicle security is also improved.

In a possible embodiment of the first aspect, if verification on the CAN message succeeds, the first device may update the first counter value; or if verification fails, the first counter value does not need to be updated.

In another possible embodiment of the first aspect, any two of the global counter values are different.

In another possible embodiment of the first aspect, a process in which the first device verifies the CAN message by using the second counter value and the current global counter value may be: The first device obtains a full counter value based on the second counter value and the global counter value, and then obtains a first verification code based on the full counter value and a key between the first device and the second device. Therefore, if the first verification code is the same as a second verification code carried in the CAN message, the verification succeeds, and the first device may update the first counter value. In this way, validity of the CAN message can be verified through collaboration of the full counter value and the key. This helps improve security of a counter value synchronization process.

In addition, in another embodiment of this application, the first verification code may alternatively be obtained by using the full counter value, the key, and content of the CAN message. Correspondingly, the second verification code is also associated with a full counter value, a key, and content of the CAN message that are obtained by the second device.

In another possible embodiment of the first aspect, the full counter value is a sum of the second counter value and the global counter value, or the full counter value is a long character string formed by the second counter value and the global counter value. In other words, the full counter value includes the global counter value and a local counter value.

In another possible embodiment of the first aspect, the first device may determine whether a sum of the first counter value and a unit count interval is equal to the second counter value. Therefore, when the sum of the first counter value and the unit count interval is not equal to the second counter value, the first device determines that the first counter value does not match the second counter value. The unit count interval may be one.

In another possible embodiment of the first aspect, when the verification succeeds, the first device processes the CAN message.

In another possible embodiment of the first aspect, the first device may obtain the current global counter value in a manner of receiving the global counter value. Further, the first device may store the global counter value.

In another possible embodiment of the first aspect, the global counter value is periodically broadcast by a third device. In embodiments of this application, the third device may be one or more of a gateway device, a domain manager device, a vehicle-mounted device, and a separately disposed counter device. The counter device is configured to count the global counter value. That is, the third device may be specifically a specified device in subsequent descriptions.

In another possible embodiment of the first aspect, if the global counter value is periodically broadcast, the first device sets the first counter to zero each time a global counter value is received.

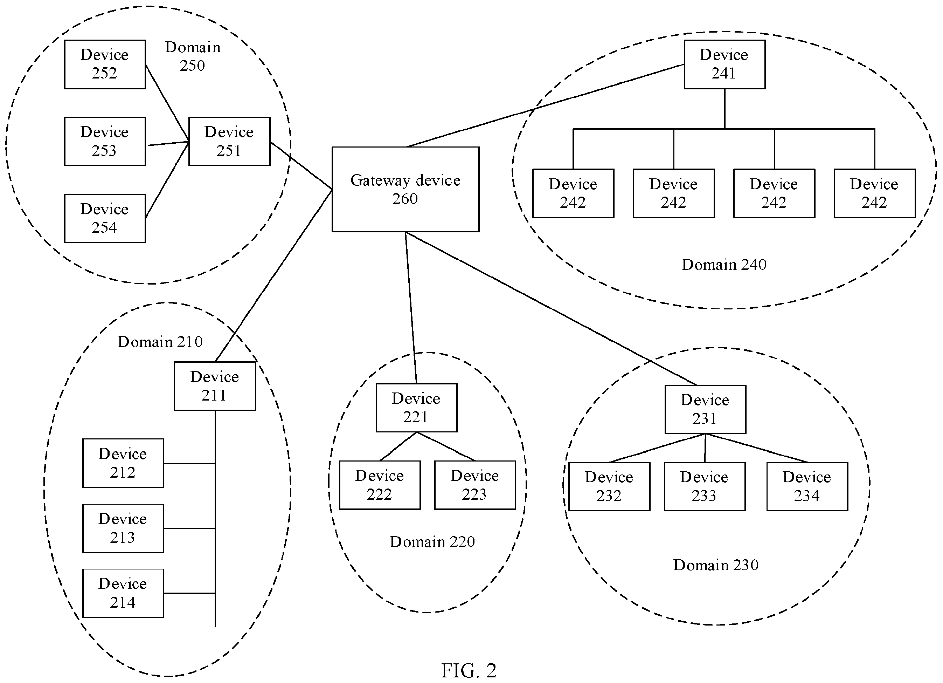

In another possible embodiment of the first aspect, before the first device receives the global counter value, the first device sends a synchronization request to a fourth device, so that the fourth device sends the global counter value to the first device. In this case, the first device may actively request the fourth device that has the global counter value to perform global counter value synchronization. In this case, the fourth device may be the third device, or the fourth device may be the second device, or the fourth device may be any device that stores the global counter value other than the third device. For example, in an embodiment shown in FIG. 2, the fourth device may alternatively be a domain manager of a domain in which the first device is located.

In another possible embodiment of the first aspect, the first device sends the synchronization request by using a first specific identifier, and the fourth device sends the global counter value by using a second specific identifier.

In another possible embodiment of the first aspect, if the synchronization request is sent after the first device is started, the first device is further configured to set the first counter to zero. If the synchronization request is sent after the first device is woken up from a sleep mode, the first device may not set the first counter to zero.

In another possible embodiment of the first aspect, the first device further includes a first timer, and the first device obtains the current global counter value based on the first timer and a first epoch.

In this case, in another possible embodiment of the first aspect, the global counter value is a period identifier of an epoch to which a current moment belongs.

In another possible embodiment of the first aspect, when a sending moment at which the second device sends the CAN message is within a boundary interval of a second epoch, the CAN message further carries a boundary identifier. The second epoch is synchronized with the first epoch. In this embodiment, the second device further includes a second timer. When sending the CAN message, the second device may obtain the current global counter value based on the second timer and the second epoch.

In another possible embodiment of the first aspect, when the CAN message carries a boundary identifier, that the first device obtains a full counter value includes: The first device corrects the global counter value by using the boundary identifier, and then the first device obtains the full counter value by using a corrected global counter value and the second counter value. Further, this communications device implements authentication protection on the CAN message by using the full counter value.

In another possible embodiment of the first aspect, when the first device has the first timer, and the second device includes the second timer, the first timer and the second timer may be synchronized periodically, or may be synchronized when a preset error condition is met. When a difference between a current moment recorded by the first timer and a current moment recorded by the second timer reaches a preset error threshold, the error condition is met.

In another possible embodiment of the first aspect, the first device and the second device are vehicle-mounted devices.

According to a second aspect, an embodiment of this application provides an information transmission method. The method is applied to a second device. The second device communicates with a first device by using a CAN message. In addition, the second device and the first device each have a counter, and the counters separately perform counting based on data receiving and sending between the second device and the first device. In this method, the second device may obtain a second counter value by using the local second counter, and then the second counter value is carried in the CAN message when the CAN message is sent to the first device. The second counter value may be used to determine whether a first counter value matches the second counter value, and when the first counter value does not match the second counter value, the second counter value is further used to verify the CAN message with reference to a global counter value currently obtained by the first device. The first counter value is obtained by the first device by using the first counter. In this way, for any CAN message, the first device can implement authentication protection on the CAN message based on the second counter value and the obtained global counter value. This helps improve communications security of the CAN message, can reduce, to some extent, a possibility of authenticating an invalid message as a valid message, and helps improve communications security of a communications system. When the communications system is an in-vehicle network communications system, vehicle security is also improved.

In a possible embodiment of the second aspect, the CAN message further carries a second verification code. In this case, when calculating the second verification code, the second device may obtain the current global counter value, obtain a full counter value based on the second counter value and the global counter value, and then obtain the second verification code based on a key between the first device and the second device and the full counter value.

In another possible embodiment of the second aspect, the second device may obtain the current global counter value in a manner of receiving the global counter value. Further, the second device may store the global counter value.

In another possible embodiment of the second aspect, the global counter value is periodically broadcast by a third device. In embodiments of this application, the third device may be one or more of a gateway device, a domain manager device, a vehicle-mounted device, and a separately disposed counter device. The counter device is configured to count the global counter value. That is, the third device may be specifically a specified device in subsequent descriptions.

In another possible embodiment of the second aspect, if the global counter value is periodically broadcast, the second device sets the second counter to zero each time a global counter value is received.

In another possible embodiment of the second aspect, before the second device receives the global counter value, the second device sends a synchronization request to a fourth device, so that the fourth device sends the global counter value to the second device. In this case, the second device may actively request the fourth device that has the global counter value to perform global counter value synchronization. In this case, the fourth device may be the third device, or the fourth device may be the first device, or the fourth device may be any device that stores the global counter value other than the third device. For example, in an embodiment shown in FIG. 2, the fourth device may alternatively be a domain manager of a domain in which the second device is located.

In another possible embodiment of the second aspect, the second device sends the synchronization request by using a first specific identifier, and the fourth device sends the global counter value by using a second specific identifier.

In another possible embodiment of the second aspect, if the synchronization request is sent after the second device is started, the second device is further configured to set the second counter to zero. If the synchronization request is sent after the second device is woken up from a sleep mode, the second device may not set the second counter to zero.

In another possible embodiment of the second aspect, the second device further includes a second timer. In this case, the second device obtains the current global counter value based on the second timer and a second epoch. Specifically, the second device may obtain a current moment recorded by the second timer, and then obtain the global counter value based on the current moment and the second epoch.

In another possible embodiment of the second aspect, when sending the CAN message, the second device may further determine whether the current moment is within a boundary interval of the second epoch. If the current moment is within the boundary interval of the second epoch, the second device adds a boundary identifier to the CAN message, and then sends, to the first device, the CAN message to which the boundary identifier is added. In this way, when receiving the CAN message, the first device may correct the global counter value based on the boundary identifier, and then perform authentication protection on the CAN message by using a corrected full counter value. This avoids a problem of global counter value out-of-synchronization possibly caused by time out-of-synchronization of the first timer and the second timer.

According to a third aspect, an embodiment of this application provides a communications device. The communications device communicates with a second device by using a controller area network CAN message. The communications device includes a first counter, the second device includes a second counter, and both the first counter and the second counter perform counting based on data receiving and sending between the communications device and the second device.

The communications device includes a transceiver module and a processing module. The transceiver module is configured to receive the CAN message from the second device. The CAN message includes a second counter value, and the second counter value is obtained by using the second counter. The processing module is configured to: determine whether a first counter value matches the second counter value, where the first counter value is obtained by using the first counter; obtain a current global counter value; and when the first counter value does not match the second counter value, verify the CAN message by using the second counter value and the global counter value. This improves communications security of the CAN message, can reduce, to some extent, a possibility of authenticating an invalid message as a valid message, and helps improve communications security of a communications system. When the communications system is an in-vehicle network communications system, vehicle security is also improved.

In a possible embodiment of the third aspect, if verification on the CAN message succeeds, the processing module is further configured to update the first counter value; or if verification fails, the first counter value does not need to be updated.

In a possible embodiment of the third aspect, any two of the global counter values are different.

In another possible embodiment of the third aspect, the processing module is specifically configured to: obtain a full counter value based on the second counter value and the global counter value, and then obtain a first verification code based on the full counter value and a key between the communications device and the second device. Therefore, if the first verification code is the same as a second verification code carried in the CAN message, the verification succeeds. In this way, validity of the CAN message can be verified through collaboration of the full counter value and the key. This helps improve security of a counter value synchronization process.

In addition, in another embodiment of the third aspect, the processing module may be further specifically configured to obtain the full counter value by using the full counter value, the key, and content of the CAN message. Correspondingly, the second verification code is also associated with a full counter value, a key, and content of the CAN message that are obtained by the second device.

In another possible embodiment of the third aspect, the full counter value is a sum of the second counter value and the global counter value, or the full counter value is a long character string formed by the second counter value and the global counter value.

In another possible embodiment of the third aspect, the processing module is specifically configured to: determine whether a sum of the first counter value and a unit count interval is equal to the second counter value; and when the sum of the first counter value and the unit count interval is not equal to the second counter value, determine that the first counter value does not match the second counter value. The unit count interval may be one.

In another possible embodiment of the third aspect, the processing module is further configured to process the CAN message when the verification succeeds.

In another possible embodiment of the third aspect, the transceiver module is further configured to receive the global counter value; and the processing module is configured to store the global counter value.

In another possible embodiment of the third aspect, the global counter value is periodically broadcast by a third device. The third device includes one or more of a gateway device, a domain manager device, a vehicle-mounted device, and a separately disposed counter device. The counter device is configured to count the global counter value.

In another possible embodiment of the third aspect, the processing module is further configured to set the first counter to zero each time a global counter value is received.

In another possible embodiment of the third aspect, the transceiver module is further configured to: before receiving the global counter value, send a synchronization request to a fourth device, so that the fourth device sends the global counter value to the communications device. In this case, the communications device may actively request the fourth device that has the global counter value to perform global counter value synchronization. In this case, the fourth device may be the third device, or the fourth device may be the second device, or the fourth device may be any device that stores the global counter value other than the third device. For example, in an embodiment shown in FIG. 2, the fourth device may alternatively be a domain manager of a domain in which the communications device is located.

In another possible embodiment of the third aspect, the transceiver module sends the synchronization request by using a first specific identifier, and the fourth device sends the global counter value by using a second specific identifier.

In another possible embodiment of the third aspect, if the synchronization request is sent after the communications device is started, the processing module is further configured to set the first counter to zero. If the synchronization request is sent after the communications device is woken up from a sleep mode, the processing module may not set the first counter to zero.

In another possible embodiment of the third aspect, the communications device further includes a first timer, and the processing module is further configured to obtain the current global counter value based on the first timer and a first epoch.

In another possible embodiment of the third aspect, the global counter value is a period identifier of an epoch to which a current moment belongs.

In another possible embodiment of the third aspect, when a sending moment at which the second device sends the CAN message is within a boundary interval of a second epoch, the CAN message further carries a boundary identifier. The second epoch is synchronized with the first epoch. In this embodiment, the second device further includes a second timer. When sending the CAN message, the second device may obtain the current global counter value based on the second timer and the second epoch.

In another possible embodiment of the third aspect, when the CAN message carries a boundary identifier, the processing module is specifically configured to: correct the global counter value by using the boundary identifier, and obtain the full counter value by using a corrected global counter value and the second counter value. Further, this communications device may implement authentication protection on the CAN message by using the full counter value.

In another possible embodiment of the third aspect, when the communications device has the first timer, and the second device includes the second timer, the first timer and the second timer may be synchronized periodically, or may be synchronized when a preset error condition is met. When a difference between a current moment recorded by the first timer and a current moment recorded by the second timer reaches a preset error threshold, the error condition is met.

In another possible embodiment of the third aspect, the communications device and the second device are vehicle-mounted devices.

According to a fourth aspect, an embodiment of this application provides a communications device. As described above, the communications device communicates with a first device by using a CAN message, the communications device and the first device each have a timer, and the timers separately perform counting based on data receiving and sending between the communications device and the first device. In this embodiment of this application, the communications device includes a processing module and a transceiver module. The processing module is configured to obtain a second counter value based on a local second counter. The transceiver module is configured to send the CAN message to the first device. The CAN message carries the second counter value. The second counter value may be used to determine whether a first counter value matches the second counter value, and when the first counter value does not match the second counter value, the second counter value is further used to verify the CAN message with reference to a global counter value currently obtained by the first device. The first counter value is obtained by the first device by using the first counter. In this way, for any CAN message, the first device can implement authentication protection on the CAN message based on the second counter value and the global counter value obtained by the first device. This helps improve communications security of the CAN message, can reduce, to some extent, a possibility of authenticating an invalid message as a valid message, and helps improve communications security of a communications system. When the communications system is an in-vehicle network communications system, vehicle security is also improved.

In a possible embodiment of the fourth aspect, the CAN message further carries a second verification code. In this case, the processing module is specifically configured to: obtain the current global counter value, obtain a full counter value based on the second counter value and the obtained global counter value, and then obtain the second verification code based on a key between the first device and the communications device and the full counter value.

In another possible embodiment of the fourth aspect, the processing module is further configured to obtain the current global counter value in a manner of receiving the global counter value. Further, the processing module may be further configured to store the global counter value.

In another possible embodiment of the fourth aspect, the global counter value is periodically broadcast by a third device. In embodiments of this application, the third device may be one or more of a gateway device, a domain manager device, a vehicle-mounted device, and a separately disposed counter device. The counter device is configured to count the global counter value. That is, the third device may be specifically a specified device in subsequent descriptions.

In another possible embodiment of the fourth aspect, if the global counter value is periodically broadcast, the processing module is further configured to set the second counter to zero each time a global counter value is received.

In another possible embodiment of the fourth aspect, the transceiver module may be further configured to: before receiving the global counter value, send a synchronization request to a fourth device, so that the fourth device sends the global counter value to the communications device. In this case, the communications device may actively request the fourth device that has the global counter value to perform global counter value synchronization. In this case, the fourth device may be the third device, or the fourth device may be the first device, or the fourth device may be any device that stores the global counter value other than the third device. For example, in an embodiment shown in FIG. 2, the fourth device may alternatively be a domain manager of a domain in which the communications device is located.

In another possible embodiment of the fourth aspect, the transceiver module may send the synchronization request by using a first specific identifier; and the fourth device may also send the global counter value by using a second specific identifier.

In another possible embodiment of the fourth aspect, if the synchronization request is sent after the second device is started, the processing module is further configured to set the second counter to zero. If the synchronization request is sent after the second device is woken up from a sleep mode, the processing module may not set the second counter to zero.

In another possible embodiment of the fourth aspect, the communications device further includes a second timer. In this case, the processing module may be specifically configured to obtain the current global counter value based on the second timer and a second epoch. Specifically, the communications device may obtain a current moment recorded by the second timer, and then obtain the global counter value based on the current moment and the second epoch.

In another possible embodiment of the fourth aspect, when sending the CAN message, the processing module may be further configured to: determine whether the current moment is within a boundary interval of the second epoch, and if the current moment is within the boundary interval of the second epoch, add a boundary identifier to the CAN message, so that the transceiver module may send, to the first device, the CAN message to which the boundary identifier is added. In this way, when receiving the CAN message, the first device may correct the global counter based on the boundary identifier, and then perform authentication protection on the CAN message by using a corrected full counter value. This avoids a problem of global counter value out-of- synchronization possibly caused by time out-of-synchronization of the first timer and the second timer.

According to a fifth aspect, an embodiment of this application further provides a communications device, including: a memory, where the memory stores a computer program; a processor; and a counter, configured to perform counting to obtain a local counter value. The computer program is configured to be executed by the processor to implement the method according to any embodiment of the first aspect or the second aspect.

In a possible embodiment of the fifth aspect, the communications device further includes a timer, configured to perform timing. In this case, the processor is further configured to obtain a current global counter value based on the timer.

For example, a current moment recorded by the timer may be obtained, and then a period identifier of an epoch to which the current moment belongs is used as the current global counter value.

According to a sixth aspect, an embodiment of this application further provides a communications system, including a first device and a second device. A first counter is disposed on the first device, a second counter is disposed on the second device, and both the first counter and the second counter perform counting based on data receiving and sending between the first device and the second device. In this embodiment of this application, the first device communicates with the second device by using a CAN message. The first device is configured to perform the method according to any embodiment of the first aspect, and the second device is configured to perform the method according to any embodiment of the second aspect.

According to a seventh aspect, this application provides a computer-readable storage medium. The computer-readable storage medium stores a computer program, and when the computer program is run on a computer, the computer is enabled to perform the method according to any embodiment of the first aspect or the second aspect.

According to an eighth aspect, this application provides a computer program. When the computer program is executed by a computer, the computer is configured to perform the method according to any embodiment of the first aspect or the second aspect.

In a possible design, the program in the eighth aspect may be all or partially stored in a storage medium that is encapsulated with a processor, or may be all or partially stored in a memory that is not encapsulated with a processor.

In conclusion, according to the information transmission method, the communications device and system, and the computer-readable storage medium provided in embodiments of this application, security and stability of an in-vehicle network can be improved to some extent.

### BRIEF DESCRIPTION OF DRAWINGS

It is noted that embodiments of FIG. 1, FIG. 3, FIG. 6, FIG. 7, FIG. 9 and FIG. 11 are not part of the invention, but are illustrative examples helpful for understanding the invention.
FIG. 1 is a block diagram of a structure of a vehicle according to an embodiment of this application;
FIG. 2 is a schematic diagram of an architecture of a communications system according to an embodiment of this application;
FIG. 3 is a schematic diagram of a frame structure of a CAN message according to an embodiment of this application;
FIG. 4 is a schematic flowchart of an information transmission method according to an embodiment of this application;
FIG. 5 is a schematic flowchart of information exchange of an information transmission method according to an embodiment of this application;
FIG. 6 is a schematic diagram of an epoch according to an embodiment of this application;
FIG. 7 is a function block diagram of a communications device according to an embodiment of this application;
FIG. 8 is a schematic diagram of an entity structure of a communications device according to an embodiment of this application;
FIG. 9 is a function block diagram of another communications device according to an embodiment of this application;
FIG. 10 is a schematic diagram of an entity structure of another communications device according to an embodiment of this application; and
FIG. 11 is a schematic diagram of an architecture of another communications system according to an embodiment of this application.

### DESCRIPTION OF EMBODIMENTS

The following describes implementations of embodiments in detail with reference to the accompanying drawings. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more than two.

Embodiments of this application may be applied to any communications system that uses a CAN network for communications, for example, a communications system in transportation means, and more specifically, an in-vehicle network system.

Specifically, the transportation means in embodiments of this application may be implemented in an automobile or may be in a form of an automobile. However, a system in an example may be implemented in another vehicle or in a form of another vehicle, such as a car, a truck, a motorcycle, a bus, a ship, an aircraft, a helicopter, a lawn mower, snow removal equipment, a van, an amusement park vehicle, agricultural equipment, construction equipment, a tram, a golf cart, a train, or a trolley bus. In addition, a robot device may be configured to perform a method and a system that are described in this specification.

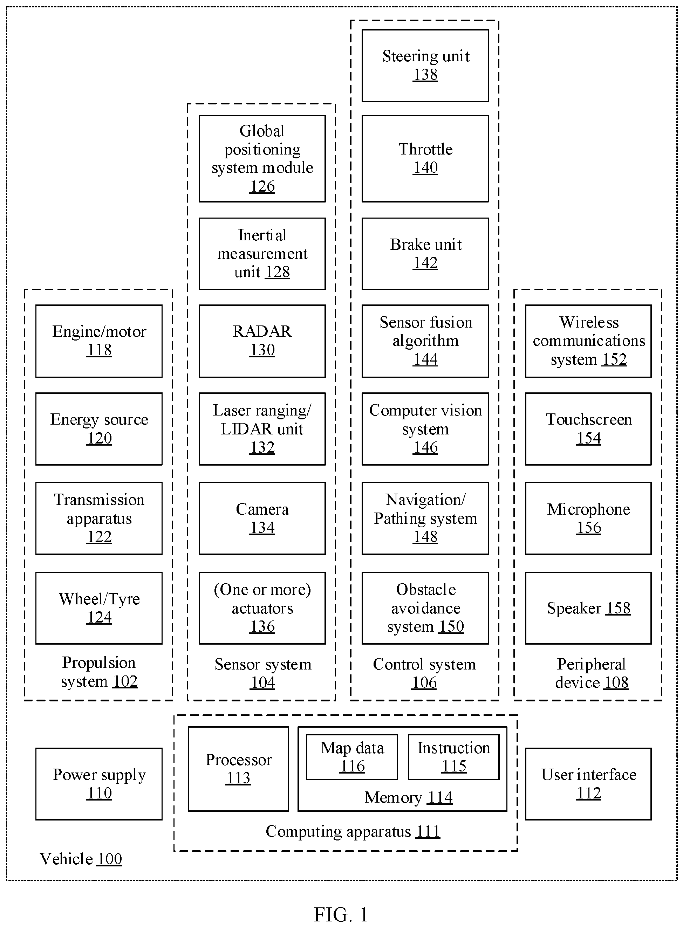

For example, FIG. 1 is a block diagram of a structure of a vehicle 100. As shown in FIG. 1, components coupled to the vehicle 100 or included in the vehicle 100 may include a propulsion system 102, a sensor system 104, a control system 106, a peripheral device 108, a power supply 110, a computing apparatus 111, and a user interface 112. The computing apparatus 111 may include a processor 113 and a memory 114. The computing apparatus 111 may be a controller of the vehicle 100 or a part of a controller. The memory 114 may include instructions 115 that may be run by the processor 113, and may further store map data 116. The components of the vehicle 100 may be configured to work in a manner of being interconnected to each other and/or being interconnected to other components coupled to respective systems. For example, the power supply 110 may supply power to all the components of the vehicle 100. The computing apparatus 111 may be configured to: receive data from the propulsion system 102, the sensor system 104, the control system 106, and the peripheral device 108, and control them. The computing apparatus 111 may be configured to: generate and display an image at the user interface 112, and receive input from the user interface 112.

In another example, the vehicle 100 may include more, fewer, or different systems, and each system may include more, fewer, or different components. In addition, the shown systems and components may be combined or divided in any manner.

The propulsion system 102 may be configured to provide power for the vehicle 100 to move. As shown in the figure, the propulsion system 102 includes an engine/a motor 118, an energy source 120, a transmission apparatus (transmission) 122, and a wheel/tire 124.

The engine/motor 118 may be or include any combination of an internal combustion engine, an electric motor, a steam engine, a Stirling engine, and the like. Another engine and motor are also possible. In some examples, the propulsion system 102 may include a plurality of types of engines and/or motors. For example, a gas-electric hybrid car may include a gasoline engine and an electric motor. Another example is possible.

The energy source 120 may be a source of all or some energy that is provided for the engine/motor 118. That is, the engine/motor 118 may be configured to convert the energy source 120 into mechanical energy. Examples of the energy source 120 include gasoline, diesel, other oil-based fuels, propane, other compressed gas-based fuels, anhydrous alcohol, solar panels, batteries, and other power sources. (One or more) energy sources 120 may additionally or alternatively include any combination of a fuel tank, a battery, a capacitor, and/or a flywheel. In some examples, the energy source 120 may also provide energy for other systems of the vehicle 100.

The transmission apparatus 122 may be configured to transmit mechanical power from the engine/motor 118 to the wheel/tire 124. Therefore, the transmission apparatus 122 may include a gearbox, a clutch, a differential, a drive shaft, and/or another element. In an example in which the transmission apparatus 122 includes the drive shaft, the drive shaft includes one or more shafts that are configured to be coupled to the wheel/tire 124.

The wheel/tire 124 of the vehicle 100 may be configured in various forms including a unicycle, a bicycle/motorcycle, a tricycle, or a four-wheel car/truck. Another wheel/tire form is also possible, such as a form of six or more wheels. The wheel/tire 124 of the vehicle 100 may be configured to differentially rotate relative to another wheel/tire 124. In some examples, the wheel/tire 124 may include at least one wheel fixedly attached to the transmission apparatus 122 and at least one tire that is coupled to a rim of the wheel and that is in contact with a driving surface. The wheel/tire 124 may be made from any combination of metal and rubber, or a combination of other materials.

The propulsion system 102 may additionally or alternatively include a component other than the shown components.

The sensor system 104 may include several sensors configured to sense information about an environment in which the vehicle 100 is located. As shown in the figure, the sensors in the sensor system include a GPS 126, an inertial measurement unit (Inertial Measurement Unit, IMU) 128, a radio detection and ranging (RADAR) unit 130, a laser ranging (LIDAR) unit 132, a camera 134, and an actuator 136 configured to modify locations and/or orientations of the sensors. The sensor system 104 may also include an additional sensor including, for example, a sensor that monitors an internal system of the vehicle 100 (such as an O₂ monitor, a fuel gauge, and an oil temperature gauge). The sensor system 104 may also include another sensor.

The GPS module 126 may be any sensor configured to estimate a geographic location of the vehicle 100. Therefore, the GPS module 126 may include a transceiver that estimates a location of the vehicle 100 relative to the earth based on GPS data. In an example, the computing apparatus 111 may be configured to estimate, in combination with the map data 116 by using the GPS module 126, a location of a lane boundary on a road on which the vehicle 100 may travel. Alternatively, the GPS module 126 may be in another form.

The IMU 128 may be configured to sense location and orientation changes of the vehicle 100 based on an inertial acceleration and any combination thereof. In some examples, a combination of sensors may include an accelerometer and a gyroscope. Other combinations of sensors are also possible.

The RADAR unit 130 may be considered as an object detection system. The object detection system is configured to detect a characteristic of an object by using a radio wave, for example, a distance, an altitude, a direction, or a velocity of the object. The RADAR unit 130 may be configured to transmit a radio wave or a microwave pulse. The radio wave or the microwave pulse may be reflected by any object in a path of the wave. The object may return partial energy of the wave to a receiver (such as a dish antenna or an antenna). The receiver may also be a part of the RADAR unit 130. The RADAR unit 130 may also be configured to perform digital signal processing on a received signal (bouncing off the object), and may be configured to recognize the object.

Other systems similar to a RADAR have been used in other parts of an electromagnetic spectrum. An example is a LIDAR (light detection and ranging), which may use visible light from a laser instead of a radio wave.

The LIDAR unit 132 includes a sensor. The sensor senses or detects, by using light, an object in the environment in which the vehicle 100 is located. Generally, the LIDAR is an optical remote sensing technology in which a distance to a target or another attribute of a target can be measured by illuminating the target by using light. For example, the LIDAR unit 132 may include a laser source and/or a laser scanner configured to emit a laser pulse, and a detector configured to receive reflection of the laser pulse. For example, the LIDAR unit 132 may include a laser rangefinder based on reflection by a rotating mirror, and perform laser scanning around a digital scenario in one dimension or two dimensions, to collect distance measurement values from a specified angle at specified intervals. In an example, the LIDAR unit 132 may include components such as a light (such as laser) source, a scanner, an optical system, components like an electronic component such as an optical detector and a receiver, and a location and navigation system.

In an example, the LIDAR unit 132 may be configured to image an object by using ultraviolet (UV) light, visible light, or infrared light, and may be used for a wide range of targets including a non-metallic object. In an example, a narrow laser beam may be used to draw a map about physical features of an object with a high definition.

In an example, wavelengths in a range from about 10 microns (infrared) to about 250 nanometers (UV) may be used. Light is generally reflected after backscattering. Different types of scattering, for example, Rayleigh scattering, Mie scattering, Raman scattering, and fluorescent, are used in different LIDAR applications. For example, based on different types of backscattering, the LIDAR may be accordingly referred to as a Rayleigh laser RADAR, a Mie LIDAR, a Raman LIDAR, and a sodium/Ferrum/potassium fluorescent LIDAR. An appropriate combination of wavelengths may allow, for example, remote map drawing for an object by searching for a wavelength-dependent change of strength of a reflected signal.

Three-dimensional (3D) imaging may be implemented by using a scanning LIDAR system and a non-scanning LIDAR system. "A 3D gated viewing laser RADAR (3D gated viewing laser radar)" is an example of a non-scanning laser ranging system. A pulsed laser and a fast gated camera are applied in the 3D gated viewing laser RADAR. An imaging LIDAR may also be implemented by using a high-speed detector array and a modulation-sensitive detector array built on a single chip generally by using complementary metal oxide semiconductor (Complementary Metal Oxide Semiconductor, CMOS) and CCD (Charge Coupled Device, hybrid complementary metal oxide semiconductor/charge coupled device) manufacturing techniques. In these apparatuses, each pixel may be partially processed through high-speed demodulation or gating, so that the array can be processed to represent an image from a camera. This technology can be used to simultaneously obtain thousands of pixels to create a 3D point cloud representing an object or a scenario detected by the LIDAR unit 132.

The point cloud may include a group of vertices in a 3D coordinate system. The vertices may be defined, for example, by X, Y, and Z coordinates, and may represent an external surface of an object. The LIDAR unit 132 may be configured to create the point cloud by measuring a large quantity of points on the surface of the object, and may output the point cloud as a data file. As a result of a process in which the LIDAR unit 132 performs 3D scanning on the object, the point cloud may be used to recognize and visualize the object.

In an example, the point cloud may be directly rendered to visualize the object. In another example, the point cloud may be converted into a polygonal or triangular grid model in a process that may be referred to as surface reconstruction. Example technologies for converting the point cloud into a 3D surface may include: Delaunay triangulation, an alpha shape, and a ball-pivoting algorithm. The technologies include constructing a triangular network on the existing vertices of the point cloud. Other example technologies may include converting the point cloud into a signed distance field, and reconstructing, by using a marching cubes algorithm, an implicit surface defined in this manner.

The camera 134 may be any camera (such as a still camera or a video camera) configured to obtain an image of the environment in which the vehicle 100 is located. Therefore, the camera may be configured to detect visible light, or may be configured to detect light from another part (such as infrared light or ultraviolet light) of a spectrum. Other types of cameras are also possible. The camera 134 may be a two-dimensional detector, or may have a three-dimensional spatial range. In some examples, the camera 134 may be, for example, a distance sensor, configured to generate a two-dimensional image indicating a distance from the camera 134 to several points in the environment. Therefore, the camera 134 may use one or more distance detection technologies. For example, the camera 134 may be configured to use a structured light technology. In the technology, the vehicle 100 illuminates an object in the environment by using a predetermined light pattern, such as a grid or checkerboard pattern, and uses the camera 134 to detect a reflection of the predetermined light pattern from the object. Based on a distortion in the reflected light pattern, the vehicle 100 may be configured to detect a distance to a point on the object. The predetermined light pattern may include infrared light or light of other wavelengths.

The actuator 136, for example, may be configured to change a location and/or an orientation of a sensor. The sensor system 104 may additionally or alternatively include a component other than the shown components.

The control system 106 may be configured to control operations of both the vehicle 100 and the components of the vehicle 100. Therefore, the control system 106 may include a steering unit 138, a throttle 140, a brake unit 142, a sensor fusion algorithm 144, a computer vision system 146, a navigation or pathing (pathing) system 148, and an obstacle avoidance system 150.

The steering unit 138 may be any combination of mechanisms configured to adjust a heading direction or a direction of the vehicle 100.

The throttle 140 may be any combination of mechanisms configured to control an operating speed and an acceleration of the engine/motor 118, to control a velocity and an acceleration of the vehicle 100.

The brake unit 142 may be any combination of mechanisms configured to decelerate the vehicle 100. For example, the brake unit 142 may slow down the wheel/tire 124 by using friction. In another example, the brake unit 142 may be configured to be regenerative (regenerative) and convert kinetic energy of the wheel/tire 124 into a current. The brake unit 142 may alternatively be in another form.

The sensor fusion algorithm 144 may include, for example, an algorithm (or a computer program product storing an algorithm) that the computing apparatus 111 may run. The sensor fusion algorithm 144 may be configured to receive data from the sensor system 104 as input. The data may include, for example, data of information detected by a sensor of the sensor system 104. The sensor fusion algorithm 144 may include, for example, a Kalman filter, a Bayesian network, or another algorithm. The sensor fusion algorithm 144 may be further configured to provide various evaluations based on the data from the sensor system 104, and the assessments include, for example, an evaluation of an individual object and/or a feature in the environment in which the vehicle 100 is located, an evaluation of a specific situation, and/or an evaluation of possible impact based on a particular situation. Other evaluations are also possible.

The computer vision system 146 may be any system configured to process and analyze an image captured by the camera 134, to recognize an object and/or a feature in the environment in which the vehicle 100 is located. The object and/or the feature include/includes, for example, lane information, a traffic signal, and an obstacle. Therefore, the computer vision system 146 may use an object identification algorithm, a structure from motion (Structure from Motion, SFM) algorithm, video tracking, or another computer vision technology. In some examples, the computer vision system 146 may be additionally configured to draw an environment map, follow an object, estimate a velocity of the object, and the like.

The navigation or pathing system 148 may be any system configured to determine a driving route for the vehicle 100. The navigation or pathing system 148 may be additionally configured to dynamically update the driving route while the vehicle 100 is in operation. In some examples, the navigation or pathing system 148 may be configured to combine data from the sensor fusion algorithm 144, the GPS module 126, and one or more predetermined maps, to determine the driving route for the vehicle 100.

The obstacle avoidance system 150 may be any system configured to identify, evaluate, and avoid or otherwise negotiate an obstacle in the environment in which the vehicle 100 is located.

The control system 106 may additionally or alternatively include a component other than the shown components.

The peripheral device 108 may be configured to allow the vehicle 100 to interact with an external sensor, another vehicle, and/or a user. Therefore, the peripheral device 108 may include, for example, a wireless communications system 152, a touchscreen 154, a microphone 156, and/or a speaker 158.

The wireless communications system 152 may be any system configured to couple to one or more other vehicles, a sensor, or another entity directly or by using a communications network in a wireless manner. Therefore, the wireless communications system 152 may include an antenna and a chip set configured to communicate with the another vehicle, the sensor, or the another entity directly or by using an air interface. The chip set or the entire wireless communications system 152 may be configured to communicate based on one or more other types of wireless communications (for example, protocols), where the wireless communications is, for example, Bluetooth, a communications protocol described in IEEE 802.11 (including any IEEE 802.11 revision), and a cellular technology (for example, GSM, CDMA, UMTS (Universal Mobile Telecommunications System, universal mobile telecommunications system), EV-DO, WiMAX, or LTE (Long Term Evolution, long term evolution), ZigBee, DSRC (Dedicated Short Range Communications, dedicated short range communications), RFID (Radio Frequency Identification, radio frequency identification), and the like). The wireless communications system 152 may alternatively be in another form.

The touchscreen 154 may be used by the user to enter a command to the vehicle 100. Therefore, the touchscreen 154 may be configured to sense at least one of a position and motion of a finger of the user through capacitive sensing, resistive sensing, a surface acoustic wave process, or the like. The touchscreen 154 can sense the motion of the finger in a direction that is parallel to a surface of the touchscreen or is in a same plane as a surface of the touchscreen, in a direction vertical to a surface of the touchscreen, or in both directions, and can further sense a level of pressure applied to the surface of the touchscreen. The touchscreen 154 may include one or more translucent or transparent insulating layers and one or more translucent or transparent conducting layers. The touchscreen 154 may alternatively be in another form.

The microphone 156 may be configured to receive audio (such as a voice command or another audio input) from the user of the vehicle 100. Similarly, the speaker 158 may be configured to output audio to the user of the vehicle 100.

The peripheral device 108 may additionally or alternatively include a component other than the shown components.

The power supply 110 may be configured to supply power to some or all components of the vehicle 100. Therefore, the power supply 110 may include, for example, a rechargeable lithium-ion or lead-acid battery. In some examples, one or more battery groups may be configured to supply power. Other power materials and configurations are also possible. In some examples, the power supply 110 and an energy source 120 may be implemented together, for example, in some pure electric vehicles.

The processor 113 included in the computing apparatus 111 may include one or more general-purpose processors and/or one or more dedicated processors (such as an image processor or a digital signal processor). If the processor 113 includes at least one processor, the processors may work independently or work in combination. The computing apparatus 111 may implement a function of controlling the vehicle 100 based on input received through the user interface 112.

The memory 114 may further include one or more volatile storage components and/or one or more nonvolatile storage components, such as an optical, magnetic, and/or organic storage apparatus, and all or a part of the memory 114 may be integrated with the processor 113. The memory 114 may include instructions 115 (for example, program logic) that are run by the processor 113, to run various vehicle functions, including any one of the functions or methods described in the specification.

The components of the vehicle 100 may be configured to work in a manner of being interconnected with other components inside and/or outside their respective systems. Therefore, the components and systems of the vehicle 100 may be communicatively linked together by using a system bus, a network, and/or another connection mechanism.

An in-vehicle communications system is used as an example herein to describe an architecture manner of a communications system 200 to which embodiments of this application are specifically applied.

For example, FIG. 2 is a schematic diagram of an architecture of a communications system according to an embodiment of this application. Specifically, FIG. 2 is a schematic diagram of a structure of the communications system 200 in the vehicle 100. As shown in FIG. 2, the communications system 200 of an in-vehicle network includes a plurality of ECU devices. Usually, these ECU devices may be divided into a plurality of domains, and each domain has a domain manager (Domain Manager, DM). As shown in FIG. 2, in this communications system, the plurality of ECU devices are divided into five domains, and each domain has a domain manager. For example, a device 211 is a domain manager (DM1) of a domain 210, a device 221 is a domain manager (DM2) of a domain 220, a device 231 is a domain manager (DM3) of a domain 230, a device 241 is a domain manager (DM4) of a domain 240, and a device 251 is a domain manager (DM5) of a domain 250. A domain manager is responsible for managing ECU devices in a domain. For example, the device 211 is responsible for managing devices 212 to 214 in the domain 210. This is similar for other domains, and details are not described.

It may be understood that in any domain, ECU devices may perform intra-domain communications.

It should be noted that, in a communications system to which embodiments of this application are applied, all communications devices in the communications system may perform communications by using a CAN network. Alternatively, only some of communications devices may perform communications by using a CAN network, and other communications devices perform communications by using another network.

In other words, in the communications system 200 shown in FIG. 2, there is at least one domain in which intra-domain communications is performed by using a CAN network. On this basis, intra-domain communications networks used in the domains may be the same or may be different.

In a possible embodiment, the five domains in the communications system 200 may use a same intra-domain communications network, for example, may use a CAN network for intra-domain communications. In this case, the CAN network is also used for performing inter-domain communications.

In another possible embodiment, there is a case in which intra-domain communications networks are different in the communications system 200. For example, in the communications system 200 shown in FIG. 2, the domain 210 may use a CAN network for intra-domain communications. The domain 220 may use a FlexRay network (a high-speed deterministic bus system that is used in automobiles and has fault tolerance) for intra-domain communications. The domain 230 may use the CAN network for intra-domain communications. The domain 240 may use a media oriented system transport (Media Oriented System Transport, MOST) network for intra-domain communications. The domain 250 may use a dedicated network of an advanced driver assistance system (Advanced Driver Assistance System, ADAS) for intra-domain communications. In this case, as shown in FIG. 2, each domain manager may perform inter-domain communications with an ECU device in another domain by using a gateway device (Gateway) 260.

It may be understood that a type of each ECU device is not particularly limited in this embodiment of this application. For example, when the domain 250 is a domain of an ADAS system, devices 252 to 254 may be sensor (Sensor) devices. When the domain 210 is a domain of the control system 106 of the vehicle 100, the device 211 may be the steering unit 138, the throttle 140, the brake unit 142, the sensor fusion algorithm 144, the computer vision system 146, the navigation or pathing (pathing) system 148, or the obstacle avoidance system 150.

For example, the vehicle shown in FIG. 1 is used as an example. An ECU device in this embodiment of this application may be any component connected to a CAN bus in FIG. 1. For example, if all components in FIG. 1 are connected to the CAN bus, any two components may communicate with each other based on the CAN bus.

In addition, in the vehicle, the components may be further divided into a plurality of domains based on the architecture shown in FIG. 1. For example, in the vehicle shown in FIG. 1, the propulsion system 102, the sensor system 104, the control system 106, the peripheral device 108, and the computing apparatus 111 each may be used as an independent domain. In this case, a domain of the sensor system 104 is used as an example, and the inertial measurement unit 128 and the global positioning system module 126 may communicate with each other by using a CAN message.

In another embodiment of FIG. 1, in the vehicle shown in FIG. 1, there is a case in which some components are connected to the CAN bus, and other components are not connected to the CAN bus. For example, the obstacle avoidance system 150 may communicate with another ECU device in a wireless communications manner. In this case, the information transmission method provided in this embodiment of this application is applicable to a case in which both a receiving device and a transmitting device are connected to a CAN bus.

It should be understood that the information transmission method provided in this embodiment of this application is applicable to any group of a receiving device and a transmitting device when both the receiving device and the transmitting device are connected to a CAN bus. However, this is not a unique communications manner between the receiving device and the transmitting device. The receiving device and the transmitting device may alternatively be provided with (or have) another communications manner, which is also allowed in this embodiment of this application.

For example, communications between the inertial measurement unit 128 and the global positioning system module 126 is still used as an example. For example, the inertial measurement unit 128 and the global positioning system module 126 each have a wireless fidelity (Wireless Fidelity, Wi-Fi) communications function. In this case, wireless communications may be implemented between the inertial measurement unit 128 and the global positioning system module 126 through Wi-Fi. In this case, if one or both of the inertial measurement unit 128 and the global positioning system module 126 are disconnected from a CAN bus, the information transmission method provided in this application is not applicable. However, if the inertial measurement unit 128 and the global positioning system module 126 are further connected to a CAN bus, the inertial measurement unit 128 and the global positioning system module 126 may still communicate with each other by using a CAN message. In this case, when the inertial measurement unit 128 and the global positioning system module 126 communicate with each other by using the CAN message, the information transmission method provided in this application is still applicable.

It may be understood that, in the schematic diagram of the architecture of the communications system shown in FIG. 2, a quantity and types of ECU devices are merely an example. This is not limited in this embodiment of this application. For example, when the domain 210 is a domain of the control system 106 of the vehicle 100, the domain may further include more ECU devices. For brief description, the ECU devices are not described one by one in the accompanying drawing. Furthermore, in addition to a domain that uses a CAN network for communications, another domain such as the domain 220, the domain 240, or the domain 250 in FIG. 2 may further use another intra-domain communications manner, for example, wireless fidelity (Wireless Fidelity, Wi-Fi), Bluetooth communications, or NFC communications. This is not particularly limited in this embodiment of this application.

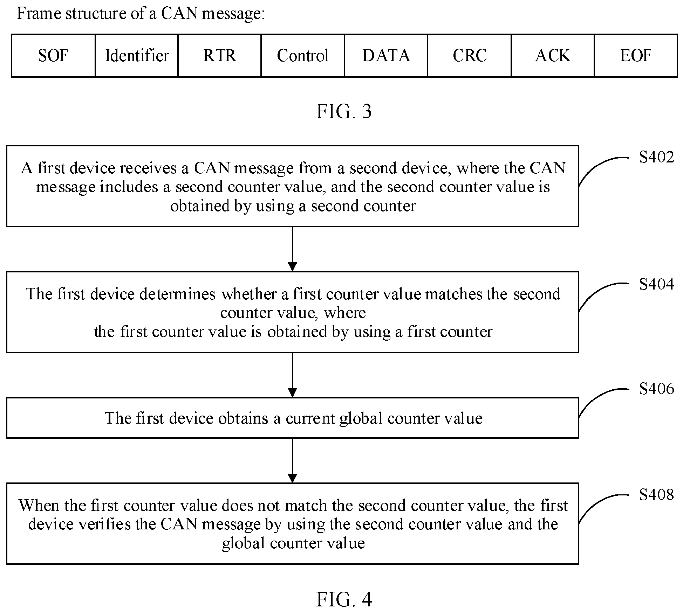

In a CAN communications network, each ECU device may broadcast a CAN message on a CAN bus. For example, FIG. 3 is a schematic diagram of a frame structure of a CAN message. As shown in FIG. 3, the frame structure of the CAN message includes seven parts: a start of frame (SoF, Start of Frame), an arbitration field (Arbitration Field), a control field (Control Field), a data field (Data Field), a CRC field (CRC Field), an acknowledgment field (ACK Field), and an end of frame (End of Frame). The control field includes an identifier (CAN ID) and an RTR, the CAN ID is used to distinguish a CAN frame, and the RTR indicates a frame type. Specifically, during CAN communications, no device ID is involved, and a device sends or receives a message by using a CAN ID. A data field is used to carry data, and usually has only 64 bits. A CAN message can carry a relatively small amount of data.

Over a CAN bus, any ECU device can send a CAN message freely. A CAN message authentication mechanism can improve security of the CAN message to some extent. Currently, a counter value is usually carried in a data field of a CAN message. After a receive end receives the CAN message, the receive end compares the counter value carried in the CAN message with a counter value maintained by the receive end to implement authentication protection on the CAN message. A manner of the authentication protection is described in detail subsequently.

When the counter values are used to implement the authentication protection on the CAN message, a counter value of a transmit end needs to be synchronized with the counter value of the receive end. However, in an actual scenario, a case of counter value out-of-synchronization often occurs, that is, a case in which the counter value of the transmit end is not synchronized with the counter value of the receive end often occurs. For this case, the counter values of the two need to be synchronized.

In the conventional technology, limited by a small amount of data that can be carried by the CAN message, the CAN message usually carries an 8-bit counter value, which may be specifically a low 8-bit counter value of a full counter value locally maintained by an ECU device. In this case, as a quantity of sent CAN messages increases, specifically, after a quantity of CAN messages sent by the transmit end reaches 2⁸ = 256 frames, the counter value is carried in a high-order bit, the low 8-bit counter value is set to zero, and counting restarts.

In this case, if the case of counter value out-of-synchronization occurs, synchronization may be performed on the counter value of the receive end by using the CAN message sent by the transmit end. The CAN message sent by the transmit end carries a current low 8-bit counter value of the transmit end. In this case, there may be two cases:

In a first case, when the low 8-bit counter value carried in the CAN message is greater than a low 8-bit counter value maintained by the receive end, the receive end may synchronize the low 8-bit counter value maintained by the receive end with the low 8-bit counter value carried in the CAN message.

In a second case, when the low 8-bit counter value carried in the CAN message is less than a low 8-bit counter value maintained by the receive end, the counter value of the transmit end may have been carried. That is, the case of counter value out-of-synchronization occurs for more than 256 frames. In this case, the receive end may attempt to replace the low 8-bit counter value maintained by the receive end with the low 8-bit counter value carried in the CAN message, and a high-order counter value increases by 1, 2, ..., to attempt to obtain a high-order counter value that has passed verification protection. For example, if a high-order counter value can pass verification protection after the high-order counter value increases by 1 (in this case, a unit count interval is 1), the receive end replaces the low 8-bit counter value maintained by the receive end with the low 8-bit counter value carried in the CAN message, and the high-order counter value increases by 1, to implement counter value synchronization.

When a case of random value out-of-synchronization occurs for more than 256 frames, the receive end considers by default that a message sent by the transmit end is valid, the high-order counter value directly increases by 1, and synchronization is performed on the low-order 8-bit counter value of the receive end. This brings a specific security risk that it is possible to authenticate an invalid message as a valid message, or authenticate a valid message as an invalid message, to severely affect communications security and vehicle security. In addition, when the case of counter value out-of-synchronization occurs for more than 256 frames, the receive end needs to make continuous attempts, and then can determine a high-order counter value for synchronization. This also seriously affects system performance of a CAN communications system and is not conducive to stable running of the system.

Based on the foregoing defects in the conventional technology, the technical solutions provided in embodiments of this application intend to improve security of a CAN message authentication mechanism, to further improve security and stability of in-vehicle network communications.

Specifically, embodiments of this application provide the following inventive concept: A full counter value maintained by each ECU device is formed by a global counter value and a local counter value. The global counter value keeps globally synchronized in an entire CAN network, and the local counter value is obtained by each ECU device performing counting by using a local counter. In this way, when a CAN message is sent, the CAN message carries the local counter value, and a receive end performs authentication protection and counter value synchronization on the CAN message based on the full counter value.

Based on the foregoing inventive concept, in embodiments of this application, the full counter value maintained by each ECU device includes two parts: the global counter value and the local counter value. A combination manner of the global counter value and the local counter value may include but is not limited to manners shown in the following embodiments.

In an embodiment, the full counter value may be a sum of the global counter value and the local counter value, that is, it is met: a full counter value := a global counter value + a local counter value, where := indicates value assignment.

In another embodiment, the full counter value may be a long character string formed by the global counter value and the local counter value. In this embodiment of this application, a sequence of the global counter value and the local counter value in the full counter value is not particularly limited. For example, a full counter value := a global counter value ∥ a local counter value, or a full counter value := a local counter value ∥ a global counter value, where ∥ indicates that a combination is a long character string.

In addition, in a possible embodiment, the full counter value may further include another value in addition to the global counter value and the local counter value. For example, in a possible embodiment, a sum of a local counter value and the global counter value may increase by a value such as 1 to obtain the full counter value. Alternatively, in another possible embodiment, on the basis of the long character string formed by the local counter value and the global counter value, one or more digits may be added before the long character string. For example, a digit 1 is added before the long character string.

The following describes the global counter value and the local counter value.

In one aspect, the local counter value is maintained by each ECU device independently.

For example, in a communications system including a first device and a second device, the first device may communicate with the second device by using a CAN message. In this case, the first device is provided with a first counter, and the first counter is configured to count a local counter value of the first device, namely, a first counter value. The second device includes a second counter, and the second counter is configured to count a local counter value of the second device, namely, a second counter value.

The local counter value may be carried in a DATA field of the CAN message, and a maximum length of the local counter value is 8 bits. In a specific implementation scenario, a length of the local counter value may be 8 bits. In this way, no additional processing (for example, tailoring) needs to be performed on the local counter value, and the local counter value may be directly carried in the CAN message.

For any pair of a receiving device and a transmitting device, respective counters perform counting based on data receiving and sending between the receiving device and the transmitting device. In other words, the first counter of the first device performs counting based on data receiving and sending between the first device and the second device, and the second counter of the second device also performs counting based on the data receiving and sending between the first device and the second device.

Specifically, the local counter value maintained by the ECU device is related to a quantity of times that the ECU device receives/sends a CAN message. When this solution is implemented, the local counter value may be a value-added counter value in step N. That is, a constant unit count interval is increased by during each counting, the unit count interval may be denoted as N, and N may be any value. Using an example in which the unit count interval is 1, if the ECU device is a transmit end, the local counter value increases by 1 each time before the transmit end sends a CAN message; or if the ECU device is a receive end, the local counter value increases by 1 each time a valid CAN message is received.

In addition, for any ECU device, the ECU device may maintain one or more local counter values. Each local counter value may correspond to a pair of ECU devices, namely, correspond to a pair of a transmit end and a receive end. It may be understood that a quantity of local counter values maintained by the ECU device depends on a quantity of devices that communicate with the ECU device.

For example, if a device 1, a device 2, and a device 3 are connected by using a CAN bus, the device 1 may communicate with the device 2 and the device 3, and the device 2 does not communicate with the device 3. In this case, the device 1 may maintain two local counter values, where the local counter value 12 corresponds to CAN communications between the device 1 and the device 2, and the local counter value 13 corresponds to CAN communications between the device 1 and the device 3. However, because the device 2 communicates only with the device 1, the device 2 may maintain one local counter value 21, and the local counter value 21 is synchronized with the local counter value 12. Similarly, because the device 3 communicates only with the device 1, the device 3 may maintain one local counter value 31, and the local counter value 31 is synchronized with the local counter value 13.

It may be understood that an ECU device may be a transmit end or a receive end. For any pair of ECU devices, an ECU device 1 may send a CAN message to an ECU device 2, or an ECU device 1 may receive a CAN message sent by an ECU device 2.

A manner of keeping local counter values synchronized is described in detail subsequently.

In another aspect, the global counter value may be generated by one or more specified devices (or may be referred to as third devices), and is globally synchronized in a CAN network. Accordingly, each ECU device may record the global counter value based on a global synchronization message. In this way, the global counter value keeps synchronized in the entire CAN network. Therefore, when the ECU device performs CAN communications, the CAN message does not need to carry the global counter value, and only needs to carry the local counter value that is independently maintained. A length of the global counter value is not specially limited to 8 bits, and a maximum length of the global counter value may be 64 bits.

For a case in which the global counter value is generated by a specified device, global counter value generation and synchronization manners are described below. It may be understood that the specified device may have another name in an actual scenario, for example, a counter center, a counter value center, or a global counter value generation center. This is not particularly limited in this embodiment of this application.

Specifically, the specified device may be any ECU device in the CAN network. Using the in-vehicle network shown in FIG. 2 as an example, the counter center may be the gateway device 260, or may be the domain manager 211 in the domain 210, or may be the device 222 in the domain 220.

It may be understood that any two global counter values are different. This can ensure that any two full counter values are different, and any full counter value is globally unique.

In this embodiment of this application, the global counter value is generated in at least the following manners:

In a first manner, the specified device may generate a globally unique random number, and perform global synchronization on the random counter value.

In a second manner, the specified device may increase by a value according to a preset step, for example, increase the value by N (N is any positive number such as 1), to generate a value-added counter value, and perform global synchronization on the value-added counter value. For example, a currently generated global counter value is N greater than a previous global counter value. In addition, a step-subtracted counter value may be further generated based on a preset step subtraction step, for example, -N (such as -1), and global synchronization is performed. For example, a currently generated global counter value is N less than a previous global counter value.

In a third manner, the specified device may further generate a global counter value associated with a current moment, and perform global synchronization on the global counter value. In this case, the specified device is provided with a timer, so that the specified device reads the current moment.

For example, the first device may be used as the specified device. In this case, the first device may further be provided with a first timer, and the first device may obtain the global counter value based on the first timer and a preset first epoch.

For example, the second device may alternatively be used as the specified device. In this case, the second device may further be provided with a second timer, and the second device may obtain the global counter value based on the second timer and a preset second epoch.

In an embodiment, the specified device may obtain a period identifier of an epoch to which the current moment belongs, and use the period identifier as the global counter value.

In this embodiment of this application, the specified device may periodically generate the global counter value. In specific implementation, the global counter value may be generated based on a preset epoch.

It may be understood that period identifiers of any two epochs are different. In an actual scenario, a period identifier of each epoch may be customized and preset based on an actual requirement. In a possible scenario, the period identifier may be preset as a start time point of the epoch. For example, if every two seconds is an epoch, 09:56 on October 28, 2019 is a start time point of one epoch, and then a period identifier of this epoch may be 201910280956000. A period identifier of a subsequent epoch may be 201910280956002, 201910280956004, ... In another possible scenario, the period identifier may be a generated unique random number, or may be a counter value increased or decreased by a step, or may be a combination identifier of at least one of any digit, letter, or character. The period identifier of the epoch is not particularly limited in this embodiment of this application.

The following describes global counter value and local counter value synchronization manners.

For global counter value synchronization, an embodiment of this application provides the following solutions:
In a specific scenario, the specified device may perform global counter value synchronization in a manner of broadcasting the global counter value over a CAN bus. Specifically, the global counter value may be periodically broadcast by a third device. It should be understood that an epoch for generating the global counter value by the specified device may be the same as or different from a broadcasting period of the global counter value. For example, when generating the global counter value, the specified device may immediately perform global broadcasting. In this case, the broadcasting period is the epoch. For another example, after generating the global counter value, the specified device may wait for a period of time, and then perform global broadcasting. In this case, the broadcasting period is different from the epoch, but period duration of the broadcasting period is the same as that of the epoch.

Accordingly, the ECU passively undergoes global counter value synchronization. Any ECU device, for example, a first device or a second device, may receive the global counter value. In a possible embodiment, after receiving the global counter value, the ECU device may further store the global counter value, and a storage manner may include caching or storing the global counter value at a preset location.

In a possible embodiment, the specified device may periodically broadcast a global synchronization message (a type of CAN message) over a CAN bus. A DATA field of the CAN message carries the global counter value currently generated by the specified device. In this case, a maximum length of the global counter value is 64 bits (a maximum bearing capacity of the DATA field).

Other ECU devices on the CAN communications network can verify validity of the global synchronization message (an authentication protection process). After the verification succeeds, the ECU device updates, based on the global synchronization message, a global counter value recorded in the ECU device to the global counter value carried in the global synchronization message. In this way, in an epoch, global counter values of all ECU devices in the CAN network are synchronized.

In addition, after receiving the global synchronization message, another ECU device may further initialize a local counter value, to restart counting. For example, each time a global counter value is received, the first device sets the first counter to zero, or the second device may set the second counter to zero. In this way, the local counter value may be used circularly, and corresponding to different global counter values, obtained full counter values are also globally unique. For example, if the local counter values each use a value-added counter value in step 1 (a unit count interval is 1), after the ECUs receive the global synchronization message and the verification succeeds, the ECUs may update the global counter values, and set all local counter values to zero.

On this basis, when receiving a CAN message, a receive end needs to verify validity of the CAN message before performing further processing based on the CAN message (there may be no processing action in some scenarios). However, when the global counter value synchronization is performed, it is very cumbersome and time-consuming for each ECU device to separately verify the validity of the global synchronization message. In addition, communications is usually performed by using a CAN ID in a CAN network. Therefore, in another embodiment of this application, a first specific CAN ID may be preset. The first specific CAN ID is used to broadcast a global counter value over a CAN bus. In other words, the specified device may use the first specific CAN ID to perform global synchronization of the global counter value. Correspondingly, when any ECU device (for example, the first device or the second device) receives a CAN message sent by the first specific CAN ID, authentication protection does not need to be performed, and synchronization may be directly performed based on a global counter value carried in the CAN message.

In any epoch, the global counter value is a constant value. For example, in a first epoch, the global counter value may be a counter value A, and in a second epoch, the global counter value may be a counter value B.

It should be noted that, in this embodiment of this application, a local counter value is not run out in any epoch. In other words, a local counter value of the ECU is less than a maximum counter value of the counter in an epoch. Specifically, for the first device, a counter value of the first counter is less than a maximum counter value of the first counter in the first epoch. For the second device, a counter value of the second counter is less than a maximum counter value of the second counter in the second epoch. In this embodiment of this application, the first epoch is the same as the second epoch, and the first epoch and the second epoch are completely synchronized.

In this way, in any epoch, carry does not occur on the local counter value due to exhaustion. In this way, even if the receive end generates a serious out-of-synchronization situation, for example, the out-of-synchronization occurs for more than 256 frames, only global counter value synchronization needs to be performed based on the global synchronization message, to keep synchronization of the global counter value, thereby avoiding a case of high-order carry caused by the out-of-synchronization. In addition, the receive end only needs to perform local counter value synchronization, to keep the counter value synchronized with that of the transmit end, and does not need to make a plurality of attempts, thereby avoiding impact on system performance.

In this embodiment of this application, period duration of an epoch of a global counter value may be controlled, to control that a local counter value is not exhausted in one epoch.

Specifically, the period duration of the epoch is associated with a length of the local counter value (L bits) and a maximum sending frequency (F milliseconds per frame) of a CAN message. If counting on a local counter value is performed based on a binary numeral, duration required for exhausting the local counter value is 2^{L} x F. Therefore, if it is required that the local counter value is not exhausted in one epoch, the period duration needs to be less than exhaustion duration (2^{L} x F).

An example is used for description. As described above, a maximum length L of a local counter value is 8 bits. For any CAN ID in a CAN communications system, it is assumed that a maximum sending frequency F for sending a CAN message is 10 milliseconds per frame. Therefore, exhaustion duration in this case is 2⁸ x 10 = 2560 milliseconds, and the period duration is less than 2560 milliseconds. In this case, the period duration of the epoch may be preset to 2 seconds or 2.5 seconds.

In addition, it should be noted that, for an ECU device that receives the global synchronization message, the ECU device may separately record the global counter value, or may combine the global counter value with the local counter value and perform recording in a manner of a full counter value.

In another specific scenario, the ECU device may actively request to perform global counter value synchronization.

For example, when the ECU device recovers to work from a sleep mode, the ECU device may miss the global synchronization message, and miss the synchronization of the global counter value, which may affect CAN communications between the ECU device and another ECU device. In this case, the ECU device may actively request the global counter value.

For another example, there are a relatively large quantity of ECU devices in an in-vehicle network, and start moments of the ECU devices may be different. In this case, when the ECU device is started, the ECU device may actively request to perform global counter value synchronization, to help subsequent CAN communications.

In an embodiment, an ECU device such as the first device may actively send a synchronization request to a fourth device. The synchronization request is used to request to perform global counter value synchronization. When receiving the synchronization request, the fourth device may send a current global counter value to the ECU device. The ECU device may perform global counter value synchronization based on the global counter value returned by the fourth device.

For example, in an embodiment, the fourth device may be the foregoing specified device, for example, the counter center. Alternatively, the fourth device may be another ECU device that communicates with a current ECU device, or the fourth device may be any device that stores the global counter value other than the third device, for example, a domain manager device of a domain in which the ECU device is located.

In a CAN communications system, ECU devices generally communicate with each other in a manner of broadcasting CAN messages over a CAN bus. In specific implementation of this solution, a second specific CAN ID and a third specific CAN ID may be used to exchange messages of the synchronization request and the global counter value. In other words, each ECU device may store two CAN IDs, one CAN ID is used to perform CAN communications with another ECU device, the other is the second specific CAN ID, and the second specific CAN ID is used to send a synchronization request.

The specified device may also store two specific CAN IDs. A first specific CAN ID is used to periodically broadcast a global synchronization message. A third specific CAN ID may be used to respond to the synchronization request sent by the ECU device, and is used to send the global counter value to the ECU device.

The first specific CAN ID may be different from the third specific CAN ID.

Specifically, when an ECU device 1 requests the global counter value from the specified device, the specified device sends the global counter value by using the third specific CAN ID. The third specific CAN ID is used to respond to the synchronization request.

After receiving the CAN message, the another ECU device determines that the CAN message is separately sent, and is not used for global synchronization. Therefore, the another ECU device does not need to update the current global counter value again, and does not need to set the local counter value to zero.

After receiving the CAN message, the ECU device 1 updates the locally recorded global counter value. In this case, the local counter value may not be set to zero, or may be set to zero. For example, if the ECU device 1 actively requests to perform global counter value synchronization after being restarted, the local counter value may be set to zero. For another example, if the ECU device 1 actively requests to perform global counter value synchronization after being restarted from a sleep mode, the ECU device 1 does not need to set the global counter value to zero, but performs local counter value synchronization based on the received CAN message.

Alternatively, the first specific CAN ID may be the same as the third specific CAN ID. In this case, after receiving the synchronization request, the specified device may send the global synchronization message by using the first specific CAN ID. In this case, after receiving the global synchronization message, each ECU device may update the global counter value, and set the local counter value to zero.

In another embodiment, the fourth device may be another ECU device that stores the global counter value. For example, when an ECU device 1 is started, or is restarted from a sleep mode, the ECU device 1 may send a synchronization request to an ECU device 2. The ECU device 2 is not the specified device, and the ECU device 2 records a global counter value for synchronization with that of the specified device. For another example, when the first device communicates with the second device, the first device may send a synchronization request to the second device. In this case, the second device serves as the fourth device, and may feed back the global counter value to the first device.

In this scenario, the ECU device may store three CAN IDs: One CAN ID is used to perform CAN communications with another ECU device; one is the second specific CAN ID, where the second specific CAN ID is used to send a synchronization request; and the third specific CAN ID may be used to send the global counter value to the ECU device in response to the synchronization request sent by the ECU device.

Based on the foregoing design, each ECU device may perform global counter value synchronization in a passive receiving manner or an active requesting manner.

In addition, a case in which local counter values are not synchronized may also be involved between the ECU devices. In this embodiment of this application, the receive end may perform local counter value synchronization based on the CAN message sent by the transmit end.

For example, in an embodiment, refer to FIG. 4. FIG. 4 is a schematic flowchart of an information transmission method. The method may be applied to the foregoing communications system including the first device and the second device. As described above, in the communications system, each ECU device performs global synchronization of the global counter value, and carries the local counter value in the CAN message for message transmission. Details are not described again.

Specifically, the method may include the following steps.

S402: The first device receives a CAN message from the second device. The CAN message includes a second counter value, and the second counter value is obtained by using a second counter.

That is, the second counter value is a local counter value of the second device.

S404: The first device determines whether a first counter value matches the second counter value. The first counter value is obtained by using a first counter.

That is, the first counter value is a local counter value of the first device.

S406: The first device obtains a current global counter value.

An obtaining manner is as described above. A broadcast may be received to obtain the current global counter value, or a request may be sent to a fourth device and the global counter value fed back by the fourth device is received, or the global counter value may be obtained by using a first timer of the first device. Details are not described.

S408: When the first counter value does not match the second counter value, the first device verifies the CAN message by using the second counter value and the global counter value.

As described above, the counter increases by N before the second device (which is a transmit end in this case) sends a CAN message, and the counter increases by N when the first device (which is a receive end in this case) receives a valid CAN message. In this way, if the local counter values of the first device and the second device are synchronized with each other, after the first device receives the CAN message, a difference between the second counter value and the first counter value is N.

In this way, the first device may determine whether a sum of the first counter value and a unit count interval (N) is equal to the second counter value. Therefore, when the sum of the first counter value and the unit count interval is not equal to the second counter value, the first device determines that the first counter value does not match the second counter value. When the sum of the first counter value and N is equal to the second counter value, the first counter value matches the second counter value.

When the first counter value does not match the second counter value, the first device needs to verify validity of the CAN message. In this case, a full counter value needs to be obtained by using the second counter value and the global counter value, and verification is performed accordingly. A verification process is described in detail subsequently.

When the verification succeeds and the CAN message is valid, the first device may update the first counter value. An updating manner may include: updating the first counter value to the second counter value; or increasing the first counter value by N, so that the first counter value is synchronized with the second counter value.

For example, when the ECU devices communicate with each other by using the CAN message, when the transmit end (the second device) sends the CAN message, a DATA field carries the local counter value (denoted as the second counter value) locally maintained by the transmit end. In this way, when receiving the CAN message, the receive end (the first device) may first determine whether the second counter value is equal to a sum of the first counter value and 1. The first counter value is the local counter value locally maintained by the receive end.

If the second counter value is equal to a sum of the first counter value and 1, the second counter value matches the first counter value, and the local counter values of the transmit end and the receive end matches with each other. In this way, on a premise that the global counter value can be kept synchronized globally, full counter values of the two are also synchronized, and respective counters of the two also perform counting synchronously.

When the verification succeeds, the first device may process the CAN message. In other words, the receive end may directly perform corresponding processing on the CAN message, for example, store the CAN message, feed back data based on the CAN message, and parse the CAN message. A processing manner is not particularly limited in this embodiment of this application.

In some other scenarios, when the verification succeeds, the receive end may not perform other processing after receiving the valid CAN message. For example, if the CAN message received by the receive end is a notification message, the receive end may not perform other processing after receiving the notification message.

Otherwise, if the second counter value is not equal to the sum of the first counter value and 1, the two values do not match, and the local counters of the transmit end and the receive end are not synchronized with each other. In this case, the receive end needs to verify (perform authentication protection on) the CAN message.

If the verification succeeds, the local counter value may be updated to the second counter value. An implementation is the same as that described above, and details are not described again.

If the verification fails, the CAN message is an invalid message. In this case, the receive end may discard the CAN message. Further, the receive end may further output a prompt message to prompt a user that the invalid message is received, and there may be a security risk. An output manner of the prompt message may include but is not limited to at least one of a sound prompt, a light blinking prompt, a text prompt, and a vibration prompt.

A process in which the first device verifies the CAN message by using the second counter value and the global counter value is described herein. Specifically, the first device obtains the full counter value, where the full counter value is obtained based on the second counter value and the global counter value. Then, the first device obtains a first verification code, where the first verification code is obtained based on the full counter value and a key between the first device and the second device. Therefore, when the first verification code is the same as a second verification code carried in the CAN message, the first device determines that the CAN message is successfully verified. Otherwise, if the first verification code is inconsistent with the second verification code, the verification fails.

In another embodiment, the first verification code may also be obtained based on the full counter value, a key between the first device and the second device, and content of the CAN message.

It should be understood that a manner in which the first device calculates the first verification code is the same as a manner in which the second device calculates the second code.

A scenario in which a device 1 (the second device) sends a CAN message to a device 2 (the first device) is used as an example herein to describe a manner of verifying the CAN message by the receive end.

The device 1 currently maintains a local counter value 12. When the device 1 needs to send a CAN message to the device 2, the device 1 increases the local counter value 12 by 1 (increases by a unit count interval), and the local counter value is updated to 12'. A DATA field in the CAN message sent by the device 1 carries the local counter value 12'.

In addition, the DATA field may further carry the second verification code, and the second verification code is associated with a full counter value 12" of the device 1. For example, in a possible embodiment, the device 1 may encrypt the full counter value 12" by using a preset encryption algorithm, to obtain the second verification code. The full counter value 12" is formed by the global counter value and the local counter value 12'.

In addition to being associated with the full counter value 12", the second verification code may alternatively be obtained based on one or two of content carried in the CAN message and a shared key between the device 1 and the device 2.

For example, in a possible embodiment, the device 1 may encrypt the full counter value 12" and the shared key between the device 1 and the device 2 by using a preset encryption algorithm, to obtain the second verification code. In another possible embodiment, the device 1 may encrypt the full counter value 12" by using a shared key between the device 1 and the device 2 to obtain the second verification code.

For another example, in another possible embodiment, the device 1 may encrypt, by using a shared key between the device 1 and the device 2, the full counter value 12" and content carried in the CAN message to obtain the second verification code. For another example, the device 1 may encrypt, by using a preset encryption algorithm, the full counter value 12", content carried in the CAN message, and a shared key between the device 1 and the device 2, to obtain the second verification code.

As a receive end, after receiving the CAN message, the device 2 may calculate the first verification code. A calculation manner is the same as a calculation manner of the second verification code, and details are not described again. The first verification code is obtained after the device 2 encrypts the full counter value 21" according to the preset encryption algorithm. In this case, the full counter value 21" is obtained by the device 2 based on the local counter value 12' and the global counter value.

For a pair of receiving device and a transmitting device, the two devices need to use a same encryption algorithm to process the full counter value, to obtain same verification codes. In this way, if the second verification code is the same as the first verification code, the verification succeeds. Otherwise, if the two are different, the verification fails.

In this way, in this embodiment of this application, authentication protection between the first device and the second device can be implemented by using the global counter value and the second counter value (the second counter value of the transmit end) that is carried in the CAN message.

Therefore, the scenario in which the second device sends the CAN message to the first device is still used as an example. The second device is the transmit end, and is provided with a second timer. The second timer performs counting based on data receiving and sending between the first device and the second device. An information transmission method performed on the transmit end is shown as follows.

The second device may obtain a second counter value by using the second counter.

The second device sends the CAN message to the first device, and the CAN message carries the second counter value.

The second counter value is used to determine whether a first counter value matches the second counter value, and when the first counter value does not match the second counter value, the second counter value is used to verify the CAN message with reference to a global counter value currently obtained by the first device. The first counter value is obtained by the first device by using a first counter.

In addition, the CAN message may further carry a second verification code. That is, before sending the CAN message, the second device obtains the current global counter value, and then the second device obtains a full counter value, where the full counter value is obtained based on the second counter value and the current global counter value obtained by the second device. Further, the second device obtains the second verification code, where the second verification code is obtained based on the full counter value and a key between the first device and the second device.

A manner of obtaining the second verification code is described above, and details are not described again.

A manner in which the second device obtains the global counter value is also described above, and there are a plurality of implementations.

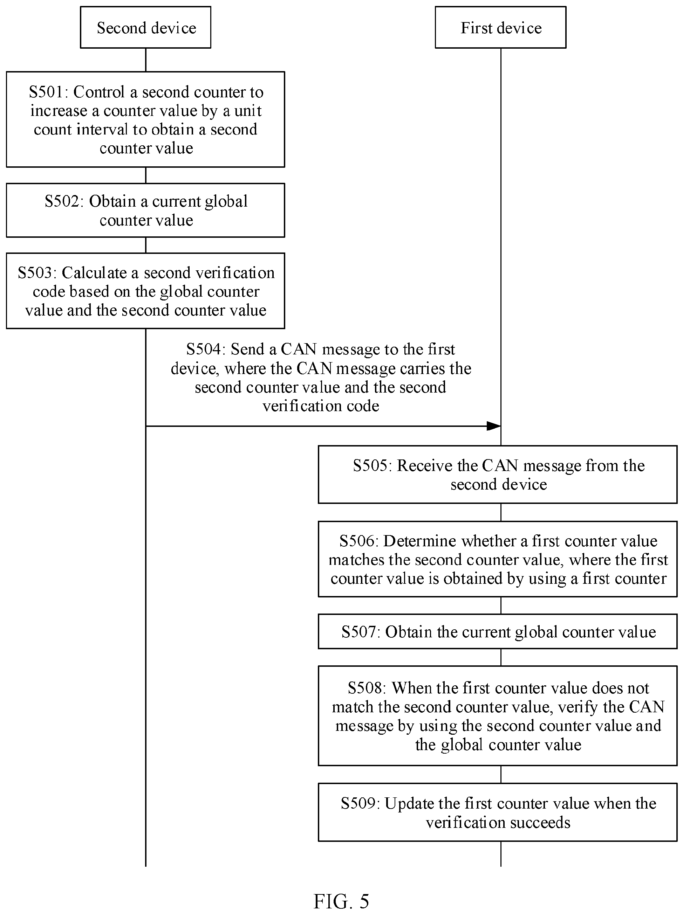

For example, FIG. 5 is a schematic flowchart of information exchange of the information transmission method according to this embodiment of this application. As shown in FIG. 5, the information transmission method may include the following steps.

S501: The second device controls the second counter to increase a counter value by a unit count interval, to obtain the second counter value.

S502: The second device obtains the current global counter value.

As described above, there may be a plurality of obtaining manners.

For example, the second device may receive a broadcast to obtain the current global counter value, or the second device may send a request to a fourth device and receive the global counter value fed back by the fourth device, or the second device may obtain the global counter value based on a second timer of the second device and a second epoch. For example, the second device obtains a current moment recorded by the second timer, and obtains the global counter value based on the current moment and the second epoch.

Details are not described.

S503: The second device calculates the second verification code based on the global counter value and the second counter value.

In an example embodiment, the second device may obtain the full counter value based on the second counter value and the global counter value, and then the second device may further use the key between the first device and the second device to process the full counter value (which is an example implementation; and as described above, there may be another processing manner in an actual scenario), to obtain the second verification code.

For another implementation, refer to the plurality of calculation manners of the device 1 in the foregoing example. Details are not described herein again.

S504: The second device sends the CAN message to the first device. The CAN message carries the second counter value and the second verification code.

S505: The first device receives the CAN message from the second device.

S506: The first device determines whether the first counter value matches the second counter value. The first counter value is obtained by using the first counter.

S507: The first device obtains the current global counter value.

S508: When the first counter value does not match the second counter value, the first device verifies the CAN message by using the second counter value and the global counter value.

Specifically, the first device calculates the full counter value by using the second counter value and the obtained global counter value, and then calculates a first verification code based on the full counter value. When the first verification code is the same as the second verification code, the verification succeeds; otherwise, when the first verification code is different from the second verification code, verification fails. Details are not described.

S509: When the verification succeeds, the first device updates the first counter value.

Otherwise, when the verification fails, the first device does not need to update the first counter value, and discards the CAN message.

In addition to the foregoing embodiments, there may be a plurality of specified devices. The plurality of specified devices may separately generate a global counter value. In this case, a case in which global counter values generated by the plurality of specified devices may be different is involved.

In this case, in a possible embodiment, one of the specified devices may perform global synchronization. An implementation is described above, and details are not described again. In this case, even if generating global counter values, the plurality of remaining specified devices synchronize the global counter values based on a global synchronization message, which is the same as an ordinary ECU device. A specified device configured to issue the global counter value may be specified, or broadcast by a specified device that first generates the global counter value.

In another possible embodiment, after generating the respective global counter values, the plurality of specified devices may first synchronize the global counter values of the specified devices, and then synchronize global counter values with other ECU devices. For example, each specified device synchronizes the global counter values of the specified devices by using another specific CAN ID, for example, a fourth specific CAN ID, and then each specified device synchronizes the synchronized global counter values with other ECU devices. For example, the specified device may be a domain manager of each domain. After the domain managers synchronize the global counter values, the domain manager performs global counter value synchronization on ECU devices in each domain. In this way, synchronization of the global counter values is implemented.

In another possible embodiment, if a plurality of specified devices generate global counter values associated with the current moment, the plurality of specified devices may further synchronize the global counter values by synchronizing timers. In this case, a timer is set in each of the plurality of specified devices. In this way, the global counter value can be generated by using a current moment maintained by the timer.

For example, if the first device further includes a first timer, the first device may obtain the global counter value based on the first timer and a first epoch. Further, the global counter value may be associated with a current moment recorded by the first timer. Specifically, the first device may use a period identifier of an epoch to which the current moment belongs as the global counter value.

Similarly, if the second device further includes a second timer, the second device may obtain the global counter value based on the second timer and a second epoch. In this case, the global counter value used by the second device is associated with a current moment recorded by the second timer. Specifically, when the second device needs to use the global counter value, the second device may obtain the current moment recorded by the second timer, and obtain a period identifier of the second epoch to which the current moment belongs. In this way, the global counter value can be obtained.

In this case, the first device and the second device may synchronize the global counter values of the first device and the second device in a manner of synchronizing the timers.

In this case, if there is a deviation between the timers of the plurality of specified devices, especially when a periodic boundary is involved, the transceiver devices easily fall within two different epochs. As a result, global counter values generated by the specified devices are different.

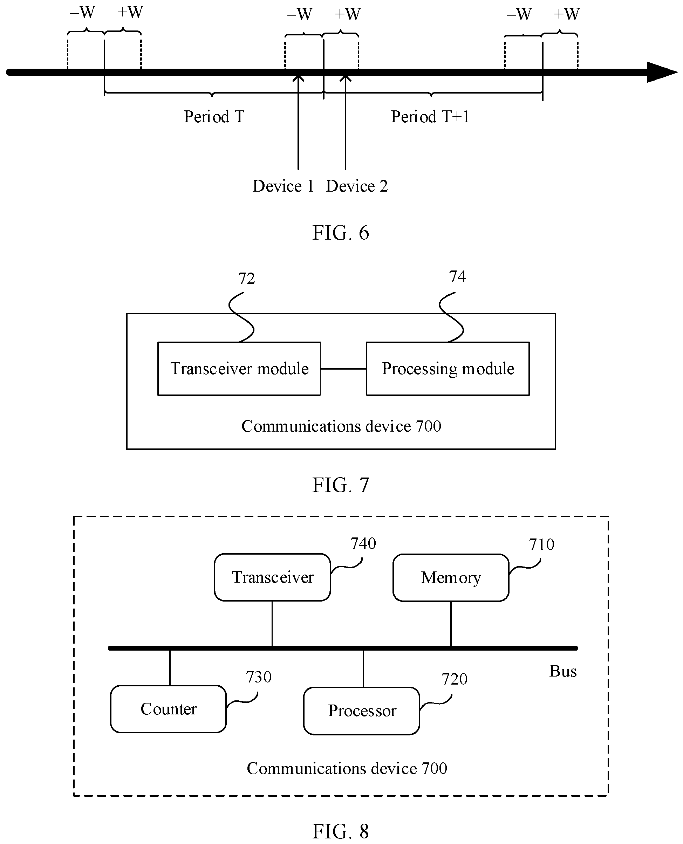

For example, refer to FIG. 6. FIG. 6 is a schematic diagram of two epochs. For ease of description, a start moment of each epoch is used as a period identifier of the epoch. For example, the period identifiers of the epochs are respectively T and T+1. Therefore, when a device 1 and a device 2 perform CAN communications, if a time deviation exists between the two devices, the following case may occur: A current moment of the device 1 is at a point A in the period T, and a current moment of the device 2 is at a point B in the period T+1. The epochs of the two devices are different, so that global counter values of the two devices are different, and verification fails when a receive end performs authentication protection on a CAN message.

For this case, in this embodiment of this application, a maximum error W in time may be further preset, and the maximum error W is a maximum error that can be allowed in time. As shown in FIG. 6, if the point A is located in an interval of -W in the period T, and the point B is located in an interval of +W in the period T+1, this case may be caused by a deviation between the timers of the two devices. Therefore, authentication protection on the CAN message can succeed in this case.

In specific implementation, when sending a CAN message, the second device (a transmit end) reads the second timer to obtain the current moment, and obtains, according to a preset epoch division manner, the period identifier of the epoch to which the current moment belongs, to obtain the global counter value.

In this case, if the current moment recorded by the second timer is within the interval of -W or +W in the epoch, the boundary identifier may be carried in the DATA field of the CAN message, to indicate that the current moment of the second device is within the periodic boundary of the current epoch.

In other words, when sending the CAN message to the first device, the second device may determine whether the current moment recorded by the second timer is within the boundary interval of the second epoch. Therefore, when the current moment is within the boundary interval of the second epoch, the second device adds the boundary identifier to the CAN message, then sends, to the first device, the CAN message to which the boundary identifier is added. Correspondingly, for the first device, the received CAN message carries the boundary identifier.

Specifically, the boundary identifier may include a first boundary identifier or a second boundary identifier. The first boundary identifier is used to indicate that the current moment of the transmit end is within a new period, and specifically, is used to represent that the current moment of the transmit end is at a positive boundary (the interval of +W) of the epoch in which the current moment of the transmit end is located. The second boundary identifier is used to indicate that the current moment of the transmit end is within an old period, and specifically, is used to represent that the current moment of the transmit end is at a negative boundary (the interval of -W) of the epoch in which the current moment of the transmit end is located.

A manner of identifying the boundary identifier may be customized. This is not particularly limited in this application. For example, the first boundary identifier may be 1, and the second boundary identifier may be 0, or vice versa. For another example, the first boundary identifier may be a symbol "+", and the second boundary identifier may be a symbol "-", or vice versa. For another example, the first boundary identifier may be a text "positive window", and the second boundary identifier may be a text "negative window", or vice versa. It may be understood that the foregoing examples are not intended to limit the implementation scope of this embodiment of this application, and the boundary identifier may alternatively be in various forms similar to those in the foregoing examples. Details are not described again.

Correspondingly, after the first device (the receive end) receives the CAN message, and the CAN message carries the boundary identifier, the first device may correct the global counter value by using the boundary identifier, and then obtain the full counter value by using a corrected global counter value and the second counter value, to implement authentication protection for the CAN message by using the full counter value.

Specifically, the receive end may determine, based on the boundary identifier in the CAN message and the epoch that is at the current moment read from the timer of the receive end, the global counter value that is used to calculate the first verification code, and then obtain, with reference to a local counter value, the full counter value for calculation.

For example, refer to FIG. 6. It is assumed that the device 2 (the second device) sends the CAN message to the device 1 (the first device), and the CAN message carries the first boundary identifier, the second counter value (namely, a local counter value of the device 2), and the second verification code. In this case, after the device 1 receives the CAN message, the current moment of the device 1 is within the interval of -W of the period T. Therefore, the device 1 may learn, based on the first boundary identifier, that the device 2 is currently within a next period, namely, the period T+1. In this way, when calculating the first verification code, the device 1 may use a period identifier of a period T+2 as the global counter value used to calculate the first verification code, and with reference to the second counter value, the full counter value used to calculate the first verification code may be obtained. In this way, the first verification code is calculated, and validity of the CAN message is verified based on the first verification code and the second verification code. In this embodiment, if the verification succeeds, the device 1 does not need to perform global counter value synchronization, the global counter value is still obtained based on the moment recorded by the local first timer, and the device 1 only needs to process the CAN message.

In the embodiment in which the global counter value is generated by using the timer, the timer of each specified device may further perform timer synchronization timely or periodically, to avoid a deviation of the global counter value caused by the deviation of the timer. For example, the timer of each device may be periodically synchronized according to a preset timer synchronization period. In this case, compared with the epoch, period duration of the timer synchronization period may be relatively long, and frequent synchronization is not required. For another example, the specified device may further perform timer synchronization on each ECU device when a vehicle is started. Alternatively, the timers may be synchronized when a preset condition is met.

The first device and the second device are used as an example. When the first device has the first timer, and the second device includes the second timer, the first timer and the second timer may be synchronized periodically, or may be synchronized when a preset error condition is met. When a difference between a current moment recorded by the first timer and a current moment recorded by the second timer reaches a preset error threshold, the error condition is met.

It should be noted that in this embodiment of this application, the plurality of specified devices may be some ECU devices in the entire CAN communications network, or may be all ECU devices in the entire CAN communications network.

For example, when all ECU devices in the entire CAN communications network each are provided with a timer, each ECU device may serve as the specified device, and each ECU device generates a global counter value based on its timer, and maintains a local counter value separately. In this case, the ECU devices only need to synchronize their respective timers based on the preset timer synchronization period.

In conclusion, according to the foregoing method provided in the embodiments of this application, the global counter value and the local counter value are combined to form the full counter value, the global counter value is globally synchronized in the entire CAN communications system, and the local counter value is not exhausted in one epoch, and the full counter value does not change due to carry. This not only can resolve an authentication protection problem of the CAN message and improve security of the CAN communications system, but also can eliminate impact on system performance caused by serious counter value inconsistency in the conventional technology and improve stability of the CAN communications system.

It may be understood that some or all of the steps or operations in the foregoing embodiments are merely examples. Other operations or variations of various operations may be further performed in this embodiment of this application. In addition, the steps may be performed in a sequence different from that presented in the foregoing embodiments, and not all operations in the foregoing embodiments may need to be performed. The foregoing specific embodiments may be combined with each other, and same or similar concepts or processes may not be described again in some embodiments.

An embodiment of this application further provides a communications device. The communications device may be configured to implement the method in a corresponding part of the ECU devices described in the foregoing method embodiments. For details, refer to a description in the foregoing method embodiments.

FIG. 7 is a function block diagram of a communications device. The communications device 700 communicates with a second device by using a CAN message. The communications device 700 further includes a first counter (not shown in FIG. 7), and the first counter performs counting based on data receiving and sending between the communications device and the second device.

As shown in FIG. 7, the communications device 700 includes:
a transceiver module 72, configured to receive the CAN message sent by the second device, where the CAN message includes a second counter value, and the second counter value is obtained by using a second counter; and
a processing module 74, configured to:
   determine whether a first counter value matches the second counter value, where the first counter value is obtained by using the first counter;
   obtain a current global counter value; and
   when the first counter value does not match the second counter value, verify the CAN message by using the second counter value and the global counter value.

In a possible embodiment, the processing module 74 is further specifically configured to update the first counter value when the verification succeeds.

In another possible embodiment, the processing module 74 is specifically configured to:
obtain a full counter value, where the full counter value is obtained based on the second counter value and the global counter value;
obtain a first verification code, where the first verification code is obtained based on the full counter value and a key between the communications device and the second device; and
when the first verification code is the same as a second verification code carried in the CAN message, determine that the verification succeeds.

In another possible embodiment, the processing module 74 may be specifically configured to obtain the first verification code based on the full counter value, the key between the communications device and the second device, and content of the CAN message.

In another possible embodiment, the full counter value is a sum of the second counter value and the global counter value, or the full counter value is a long character string formed by the second counter value and the global counter value.

In another possible embodiment, the processing module 74 is specifically configured to:
determine whether a sum of the first counter value and a unit count interval is equal to the second counter value; and
when the sum of the first counter value and the unit count interval is not equal to the second counter value, determine that the first counter value does not match the second counter value.

In another possible embodiment, the processing module 74 is further configured to process the CAN message when the verification succeeds.

In another possible embodiment, the transceiver module 72 is further configured to receive the global counter value. In this case, the processing module 74 is further configured to store the global counter value.

In another possible embodiment, the global counter value is periodically broadcast by a third device.

In another possible embodiment, the processing module 74 is further configured to set the first counter to zero each time a global counter value is received.

In another possible embodiment, the third device includes one or more of a gateway device, a domain manager device, a vehicle-mounted device, and a separately disposed counter device. The counter device is configured to count the global counter value.

In another possible embodiment, the transceiver module 72 is further configured to: before receiving the global counter value, send a synchronization request to a fourth device, so that the fourth device sends the global counter value to the communications device.

In another possible embodiment, the communications device 700 further includes a first timer (not shown in FIG. 7). The processing module 74 is further specifically configured to obtain the global counter value based on the first timer and a first epoch.

In another possible embodiment, the global counter value is a period identifier of a first epoch to which a current moment recorded by the first timer belongs.

In another possible embodiment, when a sending moment at which the second device sends the CAN message is within a boundary interval of a second epoch, the CAN message further carries a boundary identifier.

In another possible embodiment, when the CAN message carries a boundary identifier, the processing module 74 is further specifically configured to: correct the global counter value by using the boundary identifier, and obtain the full counter value by using a corrected global counter value and the second counter value.

In another possible embodiment, the communications device 700 and the second device are vehicle-mounted devices.

The communications device in the embodiment shown in FIG. 7 may be configured to execute the technical solutions executed on the first device side in the foregoing method embodiments. For an implementation principle and technical effects of the communications device, refer to related descriptions in the method embodiments. Optionally, the communications device 700 may be an ECU device.

It should be understood that division of the modules of the communications device shown in FIG. 7 is merely logical function division. In actual implementation, all or some of the modules may be integrated into one physical entity, or may be physically separated. In addition, all of the modules may be implemented in a form of software invoked by a processor element or in a form of hardware. Alternatively, some of the modules may be implemented in a form of software invoked by a processor element, and some of the modules may be implemented in a form of hardware. For example, the transceiver module 72 may be an independently disposed processor element, or may be integrated into the communications device, for example, a chip of an ECU device for implementation. In addition, the transceiver module may be stored in a memory of the communications device in a form of a program to be invoked by a processor element of the communications device to perform a function of each of the foregoing modules. An implementation of another module is similar to the implementation of the transceiver module. In addition, all or some of these modules may be integrated together, or may be implemented independently. The processor element may be an integrated circuit and has a signal processing capability. In an implementation process, steps in the foregoing methods or the foregoing modules may be implemented by using a hardware integrated logical circuit in the processor element, or by using instructions in a form of software.

For example, the foregoing modules may be configured as one or more integrated circuits for implementing the foregoing method, for example, one or more application-specific integrated circuits (Application-Specific Integrated Circuits, ASICs), one or more microprocessors (digital signal processors, DSPs), or one or more field programmable gate arrays (Field Programmable Gate Arrays, FPGAs). For another example, when one of the foregoing modules is implemented in a form of scheduling a program by a processor element, the processor element may be a general-purpose processor, for example, a central processing unit (Central Processing Unit, CPU) or another processor that can invoke the program. For another example, the modules may be integrated together, and implemented in a form of a system-on-a-chip (system-on-a-chip, SOC).

FIG. 8 is a schematic diagram of a structure of a communications device. As shown in FIG. 8, the communications device 700 includes:
a memory 710, where the memory stores a computer program;
a processor 720; and
a counter 730, configured to perform counting to obtain a local counter value.

The computer program is configured to be executed by the processor 720 to implement the method on the first device side in the foregoing embodiment.

There may be one or more processors 720 in the communications device 700. The processor 720 may also be referred to as a processing unit, and may implement a specific control function. The processor 720 may be a general-purpose processor, a dedicated processor, or the like. In an optional design, the processor 720 may store instructions, and the instructions may be run by the processor 720, so that the communications device 700 performs the method described in the foregoing method embodiments.

In another possible design, the communications device 700 may include a circuit. The circuit may implement a sending, receiving, or communications function in the foregoing method embodiments.

Optionally, there may be one or more memories 710 in the communications device 700. The memory 710 stores instructions or intermediate data, and the instructions may be run on the processor 720, so that the communications device 700 performs the method described in the foregoing method embodiments. Optionally, the memory 710 may further store other related data. Optionally, the processor 720 may also store instructions and/or data. The processor 720 and the memory 710 may be separately disposed, or may be integrated together.

In addition, as shown in FIG. 8, a transceiver 740 is further disposed in the communications device 700. The transceiver 740 may be referred to as a transceiver unit, a transceiver machine, a transceiver circuit or the like, and is configured to perform data transmission or communications with a second device or another ECU device. Details are not described herein.

As shown in FIG. 8, the memory 710, the processor 720, the counter 730, and the transceiver 740 may be connected to and communicate with each other through a bus.

If the communications device 700 is configured to implement the method corresponding to the first device side in FIG. 4 or FIG. 5, for example, the transceiver 740 may receive a CAN message sent by the second device. The processor 720 is configured to complete a corresponding determining or control operation. Optionally, the memory 710 may further store a corresponding instruction. For a specific processing manner of each component, refer to related descriptions in the foregoing embodiments.

In addition, in a possible embodiment of FIG. 8, the communications device 700 further includes a timer (not shown in FIG. 8, namely, the foregoing first timer), configured to perform timing. In this case, the processor 720 is further configured to obtain a global counter value based on a current moment recorded by the timer.

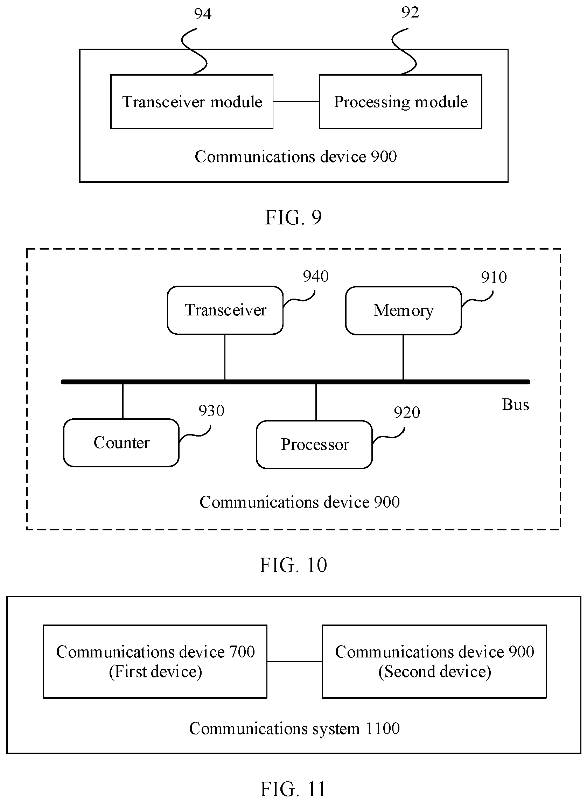

FIG. 9 is a function block diagram of another communications device. The communications device 900 communicates with a first device by using a CAN message. The communications device 900 further includes a second counter (not shown in FIG. 9), and the second counter performs counting based on data receiving and sending between the first device and the communications device 900.

As shown in FIG. 9, the communications device 900 includes a processing module 92 and a transceiver module 94.

The processing module 92 is configured to obtain a second counter value based on the local second counter.

The transceiver module 94 is configured to send the CAN message to the first device, and the CAN message carries the second counter value.

The second counter value may be used to determine whether a first counter value matches the second counter value, and when the first counter value does not match the second counter value, the second counter value is further used to verify the CAN message with reference to a global counter value currently obtained by the first device. The first counter value is obtained by the first device by using a first counter.

In a possible embodiment, the CAN message further carries a second verification code. In this case, the processing module 92 is specifically configured to: obtain the current global counter value, obtain a full counter value based on the second counter value and the obtained global counter value, and then obtain the second verification code based on a key between the first device and the communications device and the full counter value.

In another possible embodiment, the processing module 92 is further configured to obtain the current global counter value in a manner of receiving the global counter value. Further, the processing module 92 may be further configured to store the global counter value.

In another possible embodiment, the global counter value is periodically broadcast by a third device. In embodiments of this application, the third device may be one or more of a gateway device, a domain manager device, a vehicle-mounted device, and a separately disposed counter device. The counter device is configured to count the global counter value. That is, the third device may be specifically a specified device.

In another possible embodiment, if the global counter value is periodically broadcast, the processing module 92 is further configured to set the second counter to zero each time a global counter value is received.

In another possible embodiment, the transceiver module 94 may be further configured to: before receiving the global counter value, send a synchronization request to a fourth device, so that the fourth device sends the global counter value to the communications device. In this case, the communications device 900 may actively request the fourth device that has the global counter value to perform global counter value synchronization. In this case, the fourth device may be the third device, or the fourth device may be the first device, or the fourth device may be any device that stores the global counter value other than the third device. For example, in an embodiment shown in FIG. 2, the fourth device may alternatively be a domain manager of a domain in which the communications device is located.

In another possible embodiment, the transceiver module 94 may send the synchronization request by using a first specific identifier; and the fourth device may also send the global counter value by using a second specific identifier.

In another possible embodiment, if the synchronization request is sent after the second device is started, the processing module 92 is further configured to set the second counter to zero. If the synchronization request is sent after the second device is woken up from a sleep mode, the processing module 92 may not set the second counter to zero.

In another possible embodiment, the communications device further includes a second timer. In this case, the processing module 92 is specifically configured to:
obtain a current moment recorded by the second timer; and
obtain the global counter value based on the current moment and a second epoch.

In another possible embodiment, the processing module 92 is further configured to: when the current moment is within a boundary interval of the second epoch, add a boundary identifier to the CAN message.

The transceiver module 94 is specifically configured to send the CAN message to which the boundary identifier is added.

In another possible embodiment, the communications device 900 and the first device are vehicle-mounted devices.

The communications device in the embodiment shown in FIG. 9 may be configured to execute the technical solutions executed on the second device side in the foregoing method embodiments. For an implementation principle and technical effects of the communications device, refer to related descriptions in the method embodiments. Optionally, the communications device 900 may be an ECU device.

It should be understood that division of the modules of the communications device 900 shown in FIG. 9 is merely logical function division. In actual implementation, all or some of the modules may be integrated into one physical entity, or may be physically separated. In addition, all of the modules may be implemented in a form of software invoked by a processor element or in a form of hardware. Alternatively, some of the modules may be implemented in a form of software invoked by a processor element, and some of the modules may be implemented in a form of hardware. For example, the processing module 92 may be an independently disposed processor element, or may be integrated into the communications device, for example, a chip of an ECU device for implementation. In addition, the processing module may be stored in a memory of the communications device in a form of a program to be invoked by a processor element of the communications device to perform a function of each of the foregoing modules. An implementation of another module is similar to the implementation of the processing module. In addition, all or some of these modules may be integrated together, or may be implemented independently. The processor element may be an integrated circuit and has a signal processing capability. In an implementation process, steps in the foregoing methods or the foregoing modules may be implemented by using a hardware integrated logical circuit in the processor element, or by using instructions in a form of software.

For example, the foregoing modules may be configured as one or more integrated circuits for implementing the foregoing methods, for example, one or more application-specific integrated circuits (Application-Specific Integrated Circuits, ASICs), one or more microprocessors (digital signal processors, DSPs), or one or more field programmable gate arrays (Field Programmable Gate Arrays, FPGAs). For another example, when one of the foregoing modules is implemented in a form of scheduling a program by a processor element, the processor element may be a general-purpose processor, for example, a central processing unit (Central Processing Unit, CPU) or another processor that can invoke the program. For another example, the modules may be integrated together, and implemented in a form of a system-on-a-chip (system-on-a-chip, SOC).

FIG. 10 is a schematic diagram of a structure of a communications device. As shown in FIG. 10, the communications device 900 includes:
a memory 910, where the memory stores a computer program;
a processor 920; and
a counter 930, configured to perform counting to obtain a local counter value.

The computer program is configured to be executed by the processor 920 to implement the method on the second device side in the foregoing embodiment.

There may be one or more processors 920 in the communications device 900. The processor 920 may also be referred to as a processing unit, and may implement a specific control function. The processor 920 may be a general-purpose processor, a dedicated processor, or the like. In an optional design, the processor 920 may store instructions, and the instructions may be run by the processor 920, so that the communications device 900 performs the method described in the foregoing method embodiments.

In another possible design, the communications device 900 may include a circuit. The circuit may implement a sending, receiving, or communications function in the foregoing method embodiments.

Optionally, there may be one or more memories 910 in the communications device 900. The memory 910 stores instructions or intermediate data, and the instructions may be run on the processor 920, so that the communications device 900 performs the method described in the foregoing method embodiments. Optionally, the memory 910 may further store other related data. Optionally, the processor 920 may also store instructions and/or data. The processor 920 and the memory 910 may be separately disposed, or may be integrated together.

In addition, as shown in FIG. 10, a transceiver 940 is further disposed in the communications device 900. The transceiver 940 may be referred to as a transceiver unit, a transceiver machine, a transceiver circuit or the like, and is configured to perform data transmission or communications with a first device or another ECU device. Details are not described herein.

As shown in FIG. 10, the memory 910, the processor 920, the counter 930, and the transceiver 940 may be connected to and communicate with each other through a bus.

If the communications device 900 is configured to implement the method corresponding to the second device side in FIG. 4 or FIG. 5, for example, the transceiver 940 may send a CAN message to the first device. The processor 920 is configured to complete a corresponding determining or control operation. Optionally, the memory 910 may further store a corresponding instruction. For a specific processing manner of each component, refer to related descriptions in the foregoing embodiments.

In addition, in a possible embodiment of FIG. 10, the communications device 900 further includes a timer (not shown in FIG. 10, namely, the foregoing second timer), configured to perform timing. In this case, the processor 920 is further configured to obtain a global counter value based on a current moment recorded by the timer.

Furthermore, an embodiment of this application provides a communications system. For example, refer to FIG. 11. The communications system includes:
a communications device 700 (a first device), provided with a first counter, and configured to perform the method on the first device side; and
a communications device 900 (a second device), provided with a second counter, and configured to perform the method on the second device side.

The communications device 700 communicates with the communications device 900 by using a CAN message.

In addition, both the first counter and the second counter perform counting based on data receiving and sending between the first device and the second device.

It may be understood that, for a function block diagram of the communications device 700, refer to FIG. 7, and for a schematic diagram of an entity structure, refer to FIG. 8. For a function block diagram of the communications device 900, refer to FIG. 9, and for a schematic diagram of an entity structure, refer to FIG. 10. Details are not described.

An embodiment of this application further provides a computer-readable storage medium. The computer-readable storage medium includes a computer program. When the computer program is run on a computer, the computer is enabled to perform the communications method on the first device side according to the foregoing embodiments.

An embodiment of this application further provides a computer-readable storage medium. The computer-readable storage medium includes a computer program. When the computer program is run on a computer, the computer is enabled to perform the communications method on the second device side according to the foregoing embodiments.

In addition, an embodiment of this application further provides a computer program product. The computer program product includes a computer program. When the computer program is run on a computer, the computer is enabled to perform the communications method on the first device side according to the foregoing embodiments.

An embodiment of this application further provides a computer program product. The computer program product includes a computer program. When the computer program is run on a computer, the computer is enabled to perform the communications method on the second device side according to the foregoing embodiments.

It should be understood that, for any communications device, in a scenario, the communications device may be a receive end to perform the information transmission method on the first device side. In another scenario, the communications device may alternatively be a transmit end to perform the information transmission method on the second device side. Therefore, in an actual scenario, one communications device may perform, in different scenarios, the information transmission method on either side (the first device side or the second device side).

Similarly, an embodiment of this application further provides a computer-readable storage medium. The computer-readable storage medium includes a computer program. When the computer program is run on a computer, the computer is enabled to perform the communications method on the first device side or the second device side according to the foregoing method embodiments.

An embodiment of this application provides a computer program product. The computer program product includes a computer program. When the computer program product is run on a computer, the computer is enabled to perform the communications method on the first device side or the second device side in the foregoing embodiments.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or some of the procedures or functions in this application are generated. The computer may be a general-purpose computer, a dedicated computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

## Claims

1. An information transmission method, applied to a first device, wherein the first device communicates with a second device by using a controller area network, CAN, message;
the first device comprises a first counter, the second device comprises a second counter, and both the first counter and the second counter perform counting based on data receiving and sending between the first device and the second device; and
the method comprises:
receiving (S402, S505), by the first device, the CAN message from the second device, wherein the CAN message comprises a second counter value, and the second counter value is obtained by using the second counter;
determining (S404, S506), by the first device, whether a first counter value matches the second counter value, wherein the first counter value is obtained by using the first counter;
**characterized by** obtaining (S406, S507), by the first device, a current global counter value , wherein the global counter value is periodically broadcast by a third device, and the global counter value is globally synchronized in the CAN; and
when the first counter value does not match the second counter value, verifying (S408, S509), by the first device, the CAN message by using the second counter value and the global counter value.

2. The method according to claim 1, wherein the verifying, by the first device, the CAN message by using the second counter value and the global counter value comprises:
obtaining, by the first device, a full counter value, wherein the full counter value is obtained based on the second counter value and the global counter value;
obtaining, by the first device, a first verification code, wherein the first verification code is obtained based on the full counter value and a key between the first device and the second device; and
when the first verification code is the same as a second verification code carried in the CAN message, determining, by the first device, that the CAN message is successfully verified.

3. The method according to claim 2, wherein
the full counter value is a sum of the second counter value and the global counter value; or
the full counter value is a long character string formed by the second counter value and the global counter value.

4. The method according to any one of claims 1 to 3, wherein the determining, by the first device, whether a first counter value matches the second counter value comprises:
determining, by the first device, whether a sum of the first counter value and a unit count interval is equal to the second counter value; and
when the sum of the first counter value and the unit count interval is not equal to the second counter value, determining, by the first device, that the first counter value does not match the second counter value.

5. The method according to claim 1, wherein the method further comprises:
setting, by the first device, the first counter to zero each time a global counter value is received.

6. The method according to claim 1 or 5, wherein the third device comprises one or more of a gateway device, a domain manager device, a vehicle-mounted device, and a separately disposed counter device, and the counter device is configured to count the global counter value.

7. The method according to any one of claims 1 to 6, wherein the first device further comprises a first timer, and the first device obtains the global counter value based on the first timer and a first epoch.

8. The method according to claim 7, wherein when a sending moment at which the second device sends the CAN message is within a boundary interval of a second epoch, the CAN message further carries a boundary identifier.

9. The method according to claim 2, wherein when the CAN message carries a boundary identifier, the obtaining, by the first device, a full counter value comprises:
correcting, by the first device, the global counter value by using the boundary identifier; and
obtaining, by the first device, the full counter value by using a corrected global counter value and the second counter value.

10. The method according to any one of claims 1 to 9, wherein the first device and the second device are vehicle-mounted devices.

11. An information transmission method, applied to a second device, wherein the second device communicates with a first device by using a controller area network, CAN, message;
the first device comprises a first counter, the second device comprises a second counter, and both the first counter and the second counter perform counting based on data receiving and sending between the first device and the second device; and
the method comprises:
obtaining, by the second device, a second counter value by using the second counter;
**characterized by** obtaining (502), by the second device, a current global counter value, wherein the global counter value is periodically broadcast by a third device, and the global counter value is globally synchronized in the CAN; and
sending, by the second device, the CAN message to the first device, wherein the CAN message carries the second counter value; and
the second counter value is used by the first device to determine whether a first counter value matches the second counter value, and when the first counter value does not match the second counter value, the second counter value is used to verify the CAN message with reference to a global counter value currently obtained by the first device, and the first counter value is obtained by the first device by using the first counter.

12. The method according to claim 11, wherein the CAN message carries a second verification code; and the method further comprises:
obtaining, by the second device, a full counter value, wherein the full counter value is obtained based on the second counter value and the current global counter value that is obtained by the second device; and
obtaining, by the second device, the second verification code, wherein the second verification code is obtained based on the full counter value and a key between the first device and the second device.

13. A communications device (700), comprising:
a memory (710), wherein the memory stores a computer program;
a processor (720); and
a counter (730), configured to perform counting to obtain a local counter value, wherein
the computer program is configured to be executed by the processor to implement the method according to any one of claims 1 to 10.

14. A communications device (900), comprising:
a memory (910), wherein the memory stores a computer program;
a processor (920); and
a counter (930), configured to perform counting to obtain a local counter value, wherein
the computer program is configured to be executed by the processor to implement the method according to any one of claims 11 to 12.

15. A communications system, comprising:
a first device (700), provided with a first counter, and configured to perform the method according to any one of claims 1 to 10;
a second device (900), provided with a second counter, and configured to perform the method according to any one of claims 11 to 12, wherein
both the first counter and the second counter perform counting based on data receiving and sending between the first device and the second device; and
the system further comprises a third device configured to periodically broadcast a global counter value, wherein the global counter value is globally synchronized in a controller area network, CAN.

## Patentansprüche

1. Informationsübertragungsverfahren, das auf eine erste Vorrichtung angewendet wird, wobei die erste Vorrichtung mit einer zweiten Vorrichtung unter Verwendung einer Controller-Area-Network-Nachricht, CAN-Nachricht, kommuniziert;
die erste Vorrichtung einen ersten Zähler umfasst, die zweite Vorrichtung einen zweiten Zähler umfasst und sowohl der erste Zähler als auch der zweite Zähler eine Zählung basierend auf einem Datenempfang und -versand zwischen der ersten Vorrichtung und der zweiten Vorrichtung durchführen; und
das Verfahren Folgendes umfasst:
Empfangen (S402, S505), durch die erste Vorrichtung, der CAN-Nachricht von der zweiten Vorrichtung, wobei die CAN-Nachricht einen zweiten Zählerwert umfasst und der zweite Zählerwert unter Verwendung des zweiten Zählers erlangt wird;
Bestimmen (S404, S506), durch die erste Vorrichtung, ob ein erster Zählerwert mit dem zweiten Zählerwert übereinstimmt, wobei der erste Zählerwert unter Verwendung des ersten Zählers erlangt wird;
**gekennzeichnet durch** Erlangen (S406, S507), durch die erste Vorrichtung, eines aktuellen globalen Zählerwerts, wobei der globale Zählerwert regelmäßig durch eine dritte Vorrichtung ausgestrahlt wird und der globale Zählerwert global in dem CAN synchronisiert wird; und
wenn der erste Zählerwert nicht mit dem zweiten Zählerwert übereinstimmt, Überprüfen (S408, S509), durch die erste Vorrichtung, der CAN-Nachricht unter Verwendung des zweiten Zählerwerts und des globalen Zählerwerts.

2. Verfahren nach Anspruch 1, wobei das Überprüfen, durch die erste Vorrichtung, der CAN-Nachricht unter Verwendung des zweiten Zählerwerts und des globalen Zählerwerts Folgendes umfasst:
Erlangen, durch die erste Vorrichtung, eines vollständigen Zählerwerts, wobei der vollständige Zählerwert basierend auf dem zweiten Zählerwert und dem globalen Zählerwert erlangt wird;
Erlangen, durch die erste Vorrichtung, eines ersten Überprüfungscodes, wobei der erste Überprüfungscode basierend auf dem vollständigen Zählerwert und einem Schlüssel zwischen der ersten Vorrichtung und der zweiten Vorrichtung erlangt wird; und
wenn der erste Überprüfungscode mit einem zweiten Überprüfungscode übereinstimmt, der in der CAN-Nachricht enthalten ist, Bestimmen, durch die erste Vorrichtung, dass die CAN-Nachricht erfolgreich überprüft wurde.

3. Verfahren nach Anspruch 2, wobei
der vollständige Zählerwert eine Summe aus dem zweiten Zählerwert und dem globalen Zählerwert ist; oder
der vollständige Zählerwert eine lange Zeichenfolge ist, die durch den zweiten Zählerwert und den globalen Zählerwert gebildet wird.

4. Verfahren nach einem der Ansprüche 1 bis 3, wobei das Bestimmen, durch die erste Vorrichtung, ob ein erster Zählerwert mit dem zweiten Zählerwert übereinstimmt, Folgendes umfasst:
Bestimmen, durch die erste Vorrichtung, ob eine Summe aus dem ersten Zählerwert und einem Einheitszählintervall gleich dem zweiten Zählerwert ist; und
wenn die Summe aus dem ersten Zählerwert und dem Einheitszählintervall nicht gleich dem zweiten Zählerwert ist, Bestimmen, durch die erste Vorrichtung, dass der erste Zählerwert nicht mit dem zweiten Zählerwert übereinstimmt.

5. Verfahren nach Anspruch 1, wobei das Verfahren ferner Folgendes umfasst:
Einstellen, durch die erste Vorrichtung, des ersten Zählers auf Null, jedes Mal, wenn ein globaler Zählerwert empfangen wird.

6. Verfahren nach Anspruch 1 oder 5, wobei die dritte Vorrichtung eine oder mehrere aus einer Gateway-Vorrichtung, einer Domänenmanager-Vorrichtung, einer fahrzeugmontierten Vorrichtung und einer separat angeordneten Zählervorrichtung umfasst und die Zählervorrichtung dazu konfiguriert ist, den globalen Zählerwert zu zählen.

7. Verfahren nach einem der Ansprüche 1 bis 6, wobei die erste Vorrichtung ferner einen ersten Zeitgeber umfasst und die erste Vorrichtung den globalen Zählerwert basierend auf dem ersten Zeitgeber und einem ersten Zeitraum erlangt.

8. Verfahren nach Anspruch 7, wobei, wenn ein Sendezeitpunkt, zu dem die zweite Vorrichtung die CAN-Nachricht sendet, innerhalb eines Grenzintervalls eines zweiten Zeitraums liegt, die CAN-Nachricht ferner eine Grenzkennung enthält.

9. Verfahren nach Anspruch 2, wobei, wenn die CAN-Nachricht eine Grenzkennung enthält, das Erlangen, durch die erste Vorrichtung, eines vollständigen Zählerwerts Folgendes umfasst:
Korrigieren, durch die erste Vorrichtung, des globalen Zählerwerts unter Verwendung der Grenzkennung; und
Erlangen, durch die erste Vorrichtung, des vollständigen Zählerwerts unter Verwendung eines korrigierten globalen Zählerwerts und des zweiten Zählerwerts.

10. Verfahren nach einem der Ansprüche 1 bis 9, wobei die erste Vorrichtung und die zweite Vorrichtung fahrzeugmontierte Vorrichtungen sind.

11. Informationsübertragungsverfahren, das auf eine zweite Vorrichtung angewendet wird, wobei die zweite Vorrichtung mit einer ersten Vorrichtung unter Verwendung einer Controller-Area-Network-Nachricht, CAN-Nachricht, kommuniziert;
die erste Vorrichtung einen ersten Zähler umfasst, die zweite Vorrichtung einen zweiten Zähler umfasst und sowohl der erste Zähler als auch der zweite Zähler eine Zählung basierend auf einem Datenempfang und -versand zwischen der ersten Vorrichtung und der zweiten Vorrichtung durchführen; und
das Verfahren Folgendes umfasst:
Erlangen, durch die zweite Vorrichtung, eines zweiten Zählerwerts unter Verwendung des zweiten Zählers;
**gekennzeichnet durch** Erlangen (502), durch die zweite Vorrichtung, eines aktuellen globalen Zählerwerts, wobei der globale Zählerwert regelmäßig durch eine dritte Vorrichtung ausgestrahlt wird und der globale Zählerwert global in dem CAN synchronisiert wird; und
Senden, durch die zweite Vorrichtung, der CAN-Nachricht an die erste Vorrichtung, wobei die CAN-Nachricht den zweiten Zählerwert enthält; und
der zweite Zählerwert durch die erste Vorrichtung dazu verwendet wird, zu bestimmen, ob ein erster Zählerwert mit dem zweiten Zählerwert übereinstimmt und, wenn der erste Zählerwert nicht mit dem zweiten Zählerwert übereinstimmt, der zweite Zählerwert dazu verwendet wird, die CAN-Nachricht in Bezug auf einen globalen Zählerwert, der aktuell durch die erste Vorrichtung erlangt wird, zu überprüfen, und der erste Zählerwert durch die erste Vorrichtung unter Verwendung des ersten Zählers erlangt wird.

12. Verfahren nach Anspruch 11, wobei die CAN-Nachricht einen zweiten Überprüfungscode enthält; und das Verfahren ferner Folgendes umfasst:
Erlangen, durch die zweite Vorrichtung, eines vollständigen Zählerwerts, wobei der vollständige Zählerwert basierend auf dem zweiten Zählerwert und dem aktuellen globalen Zählerwert, der durch die zweite Vorrichtung erlangt wird, erlangt wird; und
Erlangen, durch die zweite Vorrichtung, des zweiten Überprüfungscodes, wobei der zweite Überprüfungscode basierend auf dem vollständigen Zählerwert und einem Schlüssel zwischen der ersten Vorrichtung und der zweiten Vorrichtung erlangt wird.

13. Kommunikationsvorrichtung (700), umfassend:
einen Speicher (710), wobei der Speicher ein Computerprogramm speichert;
einen Prozessor (720); und
einen Zähler (730), der dazu konfiguriert ist, eine Zählung durchzuführen, um einen lokalen Zählerwert zu erlangen, wobei
das Computerprogramm dazu konfiguriert ist, durch den Prozessor ausgeführt zu werden, um das Verfahren nach einem der Ansprüche 1 bis 10 umzusetzen.

14. Kommunikationsvorrichtung (900), umfassend:
einen Speicher (910), wobei der Speicher ein Computerprogramm speichert;
einen Prozessor (920); und
einen Zähler (930), der dazu konfiguriert ist, eine Zählung durchzuführen, um einen lokalen Zählerwert zu erlangen, wobei das Computerprogramm dazu konfiguriert ist, durch den Prozessor ausgeführt zu werden, um das Verfahren nach einem der Ansprüche 11 bis 12 umzusetzen.

15. Kommunikationssystem, umfassend:
eine erste Vorrichtung (700), die mit einem ersten Zähler bereitgestellt ist und dazu konfiguriert ist, das Verfahren nach einem der Ansprüche 1 bis 10 durchzuführen;
eine zweite Vorrichtung (900), die mit einem zweiten Zähler bereitgestellt ist und dazu konfiguriert ist, das Verfahren nach einem der Ansprüche 11 bis 12 durchzuführen, wobei
sowohl der erste Zähler als auch der zweite Zähler eine Zählung basierend auf einem Datenempfang und -versand zwischen der ersten Vorrichtung und der zweiten Vorrichtung durchführen; und
das System ferner eine dritte Vorrichtung umfasst, die dazu konfiguriert ist, regelmäßig einen globalen Zählerwert auszustrahlen, wobei der globale Zählerwert global in einem Controller Area Network, CAN, synchronisiert wird.

## Revendications

1. Procédé de transmission d'informations, appliqué à un premier dispositif, dans lequel le premier dispositif communique avec un deuxième dispositif à l'aide d'un message de réseau de zone de dispositif de commande, CAN ;
le premier dispositif comprend un premier compteur, le deuxième dispositif comprend un second compteur, et le premier compteur et le second compteur réalisent tous deux un comptage sur la base de la réception et de l'envoi de données entre le premier dispositif et le deuxième dispositif ; et
le procédé comprend :
la réception (S402, S505), par le premier dispositif, du message CAN provenant du deuxième dispositif, dans lequel le message CAN comprend une seconde valeur de compteur, et la seconde valeur de compteur est obtenue à l'aide du second compteur ;
le fait de déterminer (S404, S506), par le premier dispositif, si une première valeur de compteur correspond à la seconde valeur de compteur, dans lequel la première valeur de compteur est obtenue à l'aide du premier compteur ;
**caractérisé par** l'obtention (S406, S507), par le premier dispositif, d'une valeur de compteur globale actuelle, dans lequel la valeur de compteur globale est diffusée périodiquement par un troisième dispositif, et la valeur de compteur globale est synchronisée globalement dans le CAN ; et
lorsque la première valeur de compteur ne correspond pas à la seconde valeur de compteur, la vérification (S408, S509), par le premier dispositif, du message CAN à l'aide de la seconde valeur de compteur et de la valeur de compteur globale.

2. Procédé selon la revendication 1, dans lequel la vérification, par le premier dispositif, du message CAN à l'aide de la seconde valeur de compteur et de la valeur de compteur globale comprend :
l'obtention, par le premier dispositif, d'une valeur de compteur complète, dans lequel la valeur de compteur complète est obtenue sur la base de la seconde valeur de compteur et de la valeur de compteur globale ;
l'obtention, par le premier dispositif, d'un premier code de vérification, dans lequel le premier code de vérification est obtenu sur la base de la valeur de compteur complète et d'une clé entre le premier dispositif et le deuxième dispositif ; et
lorsque le premier code de vérification est le même qu'un second code de vérification transporté dans le message CAN, la détermination, par le premier dispositif, que le message CAN est vérifié avec succès.

3. Procédé selon la revendication 2, dans lequel
la valeur de compteur complète est une somme de la seconde valeur de compteur et de la valeur de compteur globale ; ou
la valeur de compteur complète est une longue chaîne de caractères formée par la seconde valeur de compteur et la valeur de compteur globale.

4. Procédé selon l'une quelconque des revendications 1 à 3, dans lequel le fait de déterminer, par le premier dispositif, si une première valeur de compteur correspond à la seconde valeur de compteur comprend :
le fait de déterminer, par le premier dispositif, si une somme de la première valeur de compteur et d'un intervalle de comptage d'unités est égale à la seconde valeur de compteur ; et
lorsque la somme de la première valeur de compteur et de l'intervalle de comptage d'unités n'est pas égale à la seconde valeur de compteur, la détermination, par le premier dispositif, que la première valeur de compteur ne correspond pas à la seconde valeur de compteur.

5. Procédé selon la revendication 1, dans lequel le procédé comprend également :
la mise à zéro, par le premier dispositif, du premier compteur à chaque fois qu'une valeur de compteur globale est reçue.

6. Procédé selon la revendication 1 ou 5, dans lequel le troisième dispositif comprend l'un ou plusieurs d'un dispositif de passerelle, un dispositif de gestionnaire de domaine, un dispositif monté sur véhicule et un dispositif de compteur disposé séparément, et le dispositif de compteur est configuré pour compter la valeur de compteur globale.

7. Procédé selon l'une quelconque des revendications 1 à 6, dans lequel le premier dispositif comprend également un premier temporisateur, et le premier dispositif obtient la valeur de compteur globale sur la base du premier temporisateur et d'une première époque.

8. Procédé selon la revendication 7, dans lequel, lorsqu'un moment d'envoi auquel le deuxième dispositif envoie le message CAN se situe dans un intervalle limite d'une seconde époque, le message CAN transporte également un identifiant de limite.

9. Procédé selon la revendication 2, dans lequel, lorsque le message CAN transporte un identifiant de limite, l'obtention, par le premier dispositif, d'une valeur de compteur complète comprend :
la correction, par le premier dispositif, de la valeur de compteur globale à l'aide de l'identifiant de limite ; et
l'obtention, par le premier dispositif, de la valeur de compteur complète à l'aide d'une valeur de compteur globale corrigée et de la seconde valeur de compteur.

10. Procédé selon l'une quelconque des revendications 1 à 9, dans lequel le premier dispositif et le deuxième dispositif sont des dispositifs montés sur véhicule.

11. Procédé de transmission d'informations, appliqué à un deuxième dispositif, dans lequel le deuxième dispositif communique avec un premier dispositif à l'aide d'un message de réseau de zone de dispositif de commande, CAN ;
le premier dispositif comprend un premier compteur, le deuxième dispositif comprend un second compteur, et le premier compteur et le second compteur réalisent tous deux un comptage sur la base de la réception et de l'envoi de données entre le premier dispositif et le deuxième dispositif ; et
le procédé comprend :
l'obtention, par le deuxième dispositif, d'une seconde valeur de compteur à l'aide du second compteur ;
**caractérisé par** l'obtention (502), par le deuxième dispositif, d'une valeur de compteur globale actuelle, dans lequel la valeur de compteur globale est diffusée périodiquement par un troisième dispositif, et la valeur de compteur globale est synchronisée globalement dans le CAN ; et
l'envoi, par le deuxième dispositif, du message CAN au premier dispositif, dans lequel le message CAN transporte la seconde valeur de compteur ; et
la seconde valeur de compteur est utilisée par le premier dispositif pour déterminer si une première valeur de compteur correspond à la seconde valeur de compteur, et lorsque la première valeur de compteur ne correspond pas à la seconde valeur de compteur, la seconde valeur de compteur est utilisée pour vérifier le message CAN en référence à une valeur de compteur globale actuellement obtenue par le premier dispositif, et la première valeur de compteur est obtenue par le premier dispositif à l'aide du premier compteur.

12. Procédé selon la revendication 11, dans lequel le message CAN transporte un second code de vérification ; et le procédé comprend également :
l'obtention, par le deuxième dispositif, d'une valeur de compteur complète, dans lequel la valeur de compteur complète est obtenue sur la base de la seconde valeur de compteur et de la valeur de compteur globale actuelle obtenue par le deuxième dispositif ; et
l'obtention, par le deuxième dispositif, du second code de vérification, dans lequel le second code de vérification est obtenu sur la base de la valeur de compteur complète et d'une clé entre le premier dispositif et le deuxième dispositif.

13. Dispositif de communication (700), comprenant :
une mémoire (710), dans lequel la mémoire stocke un programme informatique ;
un processeur (720) ; et
un compteur (730), configuré pour réaliser un comptage afin d'obtenir une valeur de compteur locale, dans lequel
le programme informatique est configuré pour être exécuté par le processeur pour mettre en œuvre le procédé selon l'une quelconque des revendications 1 à 10.

14. Dispositif de communication (900), comprenant :
une mémoire (910), dans lequel la mémoire stocke un programme informatique ;
un processeur (920) ; et
un compteur (930), configuré pour réaliser un comptage afin d'obtenir une valeur de compteur locale, dans lequel
le programme informatique est configuré pour être exécuté par le processeur pour mettre en œuvre le procédé selon l'une quelconque des revendications 11 et 12.

15. Système de communication, comprenant :
un premier dispositif (700), pourvu d'un premier compteur, et configuré pour réaliser le procédé selon l'une quelconque des revendications 1 à 10 ;
un deuxième dispositif (900), pourvu d'un second compteur, et configuré réaliser le procédé selon l'une quelconque des revendications 11 et 12, dans lequel
le premier compteur et le second compteur réalisent tous deux un comptage sur la base de la réception et de l'envoi de données entre le premier dispositif et le deuxième dispositif ; et
le système comprend également un troisième dispositif configuré pour diffuser périodiquement une valeur de compteur globale, dans lequel la valeur de compteur globale est synchronisée globalement dans un réseau de zone de dispositif de commande, CAN.
